(19) Europäisches Patentamt
European Patent Office
Office européen des brevets

(11) EP 1 267 508 A1

(12) # EUROPEAN PATENT APPLICATION
published in accordance with Art. 158(3) EPC

(43) Date of publication:
**18.12.2002 Bulletin 2002/51**

(21) Application number: **00905415.6**

(22) Date of filing: **29.02.2000**

(51) Int Cl.[7]: **H04J 11/00**, H04J 1/00

(86) International application number:
**PCT/JP00/01178**

(87) International publication number:
**WO 01/065748 (07.09.2001 Gazette 2001/36)**

(84) Designated Contracting States:
**AT BE CH CY DE DK ES FI FR GB GR IE IT LI LU MC NL PT SE**

(71) Applicant: **FUJITSU LIMITED**
**Kawasaki-shi, Kanagawa 211-8588 (JP)**

(72) Inventor: **YOSHIDA, Makoto**
**Kawasaki-shi Kanagawa 211-8588 (JP)**

(74) Representative: **HOFFMANN - EITLE**
**Patent- und Rechtsanwälte**
**Arabellastrasse 4**
**81925 München (DE)**

(54) **ENCODING METHOD FOR MULTICARRIER TRANSMISSION AND ENCODER USING THE SAME**

(57) A coding method in multicarrier transmission which enables to obtain peak power suppression as well as high quality with error correction capability, and also enables preferable application to any modulation system and an encoder using the aforementioned coding method are proposed. The coding algorithm for attaining the above object of the present invention is intended to apply for performing $2^m$-state amplitude/phase modulation using a plurality of carriers N (= κn: κ is code length).

FIG. 5

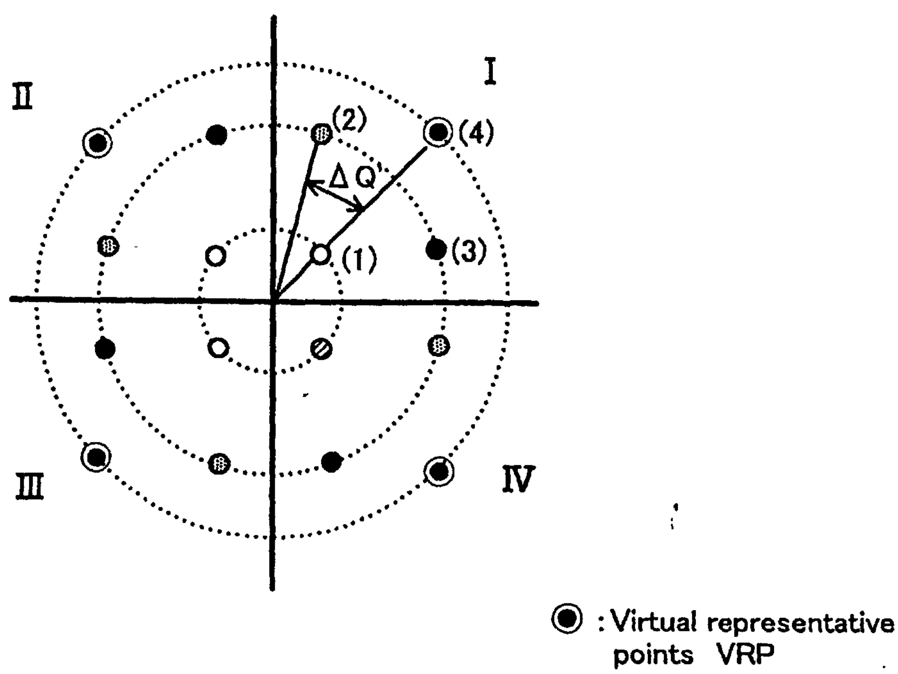




Printed by Jouve, 75001 PARIS (FR)

**Description**

FIELD OF THE INVENTION

The present invention relates to a coding method in multicarrier transmission and an encoder using the same, and more particularly a coding method applicable to amplitude and phase modulation of a code having capabilities of peak power suppression and error correction and an encoder using the same.

BACKGROUND OF THE INVENTION

In broadband wireless communication, degradation of channel quality caused by frequency selective fading in multipaths becomes a major problem. Multicarrier transmission system is known as a modulation system having good performances property against multipath fading.

FIG. 1 is a diagram illustrating this multicarrier modulation system. A method shown in FIG. 1A enables to obtain a frequency diversity effect against frequency selective fading by dividing the transmission bandwidth into a plurality of carriers (which are referred to as subcarriers), which enables high quality wireless transmission.

An orthogonal frequency division multiplex (OFDM) method shown in FIG. 1B is one variation of the multicarrier modulation system.

Now, one technological problem of the multicarrier transmission lies in producing peak power (or peak-to-average power ratio) increase in a transmission signal. Therefore, in order to maintain the linearity of the system, an amplifier is required to have a wideband linearity as well as a linear dynamic input.

However, such an amplifier is costly and has low power efficiency. Meanwhile, in case of employing low-cost amplifier, nonlinear distortion is produced when using a saturation range of the amplifier, and thus the performance becomes degraded. For this reason the aforementioned problem has been a bottleneck against practical use of multicarrier modulation system.

As one solution to this problem, in a prior patent application, PCT/JP99/07123, the inventors of the present invention et al. have proposed a coding and decoding method having capabilities of peak power suppression and error correction by a phase difference condition produced from a plurality of carrier signal points.

In the invention of the aforementioned prior patent application (hereinafter simply referred to as the invention of the prior application), there are required the concepts of 'kernel' and 'subset'. Namely, a set of $2^k$-carriers being separated (adjacent in this figure) at regular frequency intervals is referred to as a subset. Here, κ-carrier groups (κ : code length) constituted by two subsets of arbitrary combination are referred to as a kernel.

In the invention of the prior application, the following are attained at code length $\kappa = 2^{k+1}$:

$$\text{Peak envelope power (PEP) suppression amount:} \Delta P_{pep}\,(2^{k+1})$$

$$= 3\,k\ [\text{dB}]$$

and, Minimum free distance of the code: $d_{min} = \sqrt{2^k}\,d$

Here, an example of k = 1, i.e. the code length κ = 4 is considered.

The carrier frequency intervals of four carriers constituting this code (κ = 4 kernels) is shown in FIG. 2, based on the above-mentioned conditions.

Here, the minimum carrier interval is defined as Δ f, and the phase difference between signal points in two carriers having a certain carrier interval pΔf (p≧1) (hereafter referred to as 'κ = 4 subsets') is defined as Δθ(2).

Signal points in the four carriers are allocated so that the phase difference of the kernels, i.e. the total phase difference of the two subsets Δϕ(4) (0 ≦ Δϕ(4) < 2π) satisfies;

$$|\Delta\phi(4)| = |\Delta\theta(2) - \Delta\theta^*(2)|$$
$$= \pi \qquad (1)$$

FIG. 3 shows a typical example under the conditions of p = 1 and q = 4.

The example shown in FIG. 3A is a case that the phase difference between each carrier frequency in subset #1 is Δθ(2); and the phase difference between each carrier frequency in subset #3 is Δθ*(2).

Now, assuming that the two carrier phases in subset #1 shown in FIG. 3A are allocated as shown in FIG. 3B, and the two carrier phases in subset #3 are allocated as shown in FIG. 3C, this satisfies the above formula (1).

Thus, PEP suppression amount $\Delta P_{pep}$ = 3 [dB] is obtained for an arbitrary subset interval q, and at the same time an improvement of a C/N-to-SER (symbol error rate) performance at minimum free distance of code: $d_{min} = \sqrt{2}d$ (where d is the distance between signal points) can also be attained.

Further, assuming the total number of carriers N = κn (n ≧ 1) in $2^m$-PSK modulation system (m ≧ 1), an ideal coding rate $R_{2^{k+1}}(n,m)$ at the code length $\kappa = 2^{k+1}$ is given by the following formula, the total number of code patterns, $P_{2^{k+1}}(n, m)$, in case of k ≧ 2 is given by the following:

$$R_{2^{k+1}}(n,m) = \frac{\log_2 P_{2^{k+1}}(n,m)}{2^{k+1}mn} = \frac{1}{2}R_{2^k}(n,m) + \frac{1}{2^{k+1}} \quad (2)$$

By the above-mentioned algorithm, the invention of the prior application realizes a PEP suppression amount: $\Delta P_{pep}(2^{k+1})$ = 3 k [dB], and also it is possible to attain a minimum free distance of the code: $d_{min} = \sqrt{2^k}d$ having error correction capability.

As mentioned above, according to the invention of the prior application, it becomes possible to suppress an increase of peak-to-average power ratio by maintaining a constant predetermined value for the phase difference Δ θ. The principle of avoiding increase of peak-to-average power ratio was described in detail in the specification of the prior application mentioned earlier, and therefore the description is omitted here.

However, according to the method of the invention in the prior application, the method is applicable only to the phase modulation system, although the method is applicable to such a modulation system having an arbitrary modulation index. Namely, in the prior application, it is not mentioned to apply to a modulation system accompanied by amplitude modulation (such as multi-level amplitude phase shift keying (M-APSK), multi-level quadrature amplitude modulation (M-QAM), or the like).

In other words, the invention of the prior application is based on a condition of having a certain phase difference (for example, Δ = π) only, i.e. having a constant amplitude level. On the other hand, in the phase modulation systems employing amplitude modulation, such as multi-level amplitude phase shift keying (M-APSK), multi-level quadrature amplitude modulation (M-QAM), or the like, there are provided several different amplitude levels.

Accordingly, on condition that the signal point mapping is restricted for entire carriers so that phase difference against an identical amplitude level has a certain constant value (for example, Δθ= π), a desired peak power suppression amount $\Delta P_{pep}$ can be obtained.

However, because this restriction remarkably reduces the number of code patterns, a codeing rate thereof is decreased. Therefore it is hard to consider the method efficient. Further, a complex control is required to implement the method. Accordingly, the method is concluded not practical to apply.

SUMMARY OF THE INVENTION

Accordingly, it is an object of the present invention to provide a coding method in multicarrier transmission which enables to obtain peak power suppression as well as high quality with error correction capability, and also enables preferable application to any modulation system and an encoder using the aforementioned coding method.

The coding algorithm for attaining the above object of the present invention is intended to apply for performing $2^m$-state amplitude/phase modulation using a plurality of carriers N (= κn: κ is code length) . The algorithm includes the steps of: dividing the phase space into $2^{m'}$ groups (m >m'); regarding each representative point in said $2^{m'}$ groups as $2^{m'}$-PSK signal point; selecting a pair so that the summation of phase difference Δθ (0 ≦ θ ≦ 2π) between the regarded $2^{m'}$-PSK signal points becomes π; and selecting each signal point within the $2^{m'}$ groups by $2^{m-m'}$ bits.

As one preferred embodiment of the coding algorithm according to the present invention, each representative point in the aforementioned $2^{m'}$ groups has a maximum amplitude level.

Further, as another preferred embodiment, the above-mentioned m' is set as m' = 2 representing quadrant information.

Still further, as another preferred embodiment, in case said code length $\kappa = 2^{k+1}$ (k ≧ 2), the coding algorithm includes the steps of: setting a basic subset of $2^k$-carriers, which is a kernel of $\kappa = 2^k$, and an extended subset of $2^k$-carriers having a phase difference applied to the basic subset; and selecting a signal point so that no phase error is produced in the basic subset against the extended subset, to perform QAM (quadrature amplitude modulation).

Further, as still another preferred embodiment, the coding algorithm includes the step of copying an information bit identical to the basic subset to the extended subset so that no phase error is produced in the basic subset against the extended subset.

Further, as still another preferred embodiment, non-coding is performed against at least one carrier or more.

Further, as still another preferred embodiment, a different modulation system is applied for each of said N carriers ($N = \kappa n$: $\kappa$ is code length).

Further scopes and features of the present invention will become more apparent by the following description of the embodiments with the accompanied drawings.

## BRIEF DESCRIPTION OF THE DRAWINGS

FIG. 1 shows an explanation diagram illustrating a multicarrier modulation system.

FIG. 2 shows a diagram illustrating carrier frequency intervals of four carriers ($\kappa = 4$ kernels) in case of code length $\kappa = 4$.

FIG. 3 shows a typical signal point mapping in the system shown in FIG. 2.

FIG. 4 shows a diagram illustrating amplitude levels in an amplitude/phase modulation system.

FIG. 5 shows a diagram illustrating signal point allocation in a 16-QAM system.

FIG. 6 shows a diagram illustrating signal point allocation in an 8-APSK system.

FIG. 7 shows a diagram illustrating a performance of amplitude error versus peak power suppression amount in a kernel.

FIG. 8 shows a diagram illustrating a performance of phase error versus peak power suppression amount in a kernel.

FIG. 9 shows a diagram illustrating signal point allocation in a 64-QAM system.

FIG. 10 shows a diagram illustrating a performance of amplitude/phase error versus peak power suppression amount in a 16-QAM system.

FIG. 11 shows a diagram illustrating a performance of amplitude/phase error versus peak power suppression amount in a 64-QAM system.

FIG. 12 shows an embodiment of an encoder in $2^m$-state amplitude/phase modulation corresponding to a first embodiment of the present invention.

FIG. 13 shows an embodiment of an encoder in $2^m$-state amplitude/phase modulation corresponding to a second embodiment of the present invention.

FIG. 14 shows an embodiment of an encoder in $2^m$-state amplitude/phase modulation corresponding to a third embodiment of the present invention.

FIG. 15 shows a diagram illustrating an example of a multicarrier transmission system in which different modulation systems (as an example, QPSK and 16-QAM) are mixed.

FIG. 16 shows an embodiment of an encoder in $2^m$-state amplitude/phase modulation corresponding to a fourth embodiment of the present invention.

FIG. 17 shows an embodiment of an encoder in $2^m$-state amplitude/phase modulation corresponding to a fifth embodiment of the present invention.

FIG. 18 shows a diagram illustrating peak power suppression amount in amplitude/phase modulation system according to the present invention.

FIG. 19 shows a diagram in which performance on the number of carriers versus coding rate in the first to third embodiments of the present invention are compared for 64-QAM and 16-QAM (in case of $k = 1$, code length $\kappa = 2^{k+1}$).

FIG. 20 shows a diagram in which performances on the number of carriers versus coding rate in the first to third embodiments of the present invention are compared for 64-QAM and 16-QAM (in case of $k = 2$, code length $\kappa = 2^{k+1}$).

## DETAILED DESCRIPTION OF THE PREFERRED EMBODIMENTS

The preferred embodiment of the present invention is described hereinafter referring to the charts and drawings , wherein like numerals or symbols refer to like parts.

Before explaining the embodiments of the present invention, features and outline of the present invention is explained hereafter.

As shown in FIG. 4, a configuration having the number of amplitude levels L of amplitude/phase modulation system and amplitude level 1 of each carrier signal ($1 \leqq 1 \leqq L$) is considered. When the entire carriers have maximum amplitude level L, this may be considered a phase modulation in which the maximum amplitude level is normalized.

In this case, it is not necessary to consider the amplitude level below the above-mentioned value from the viewpoint of peak power suppression, though it is to be considered in view of modulation/demodulation, needless to say. Here, there exists a tradeoff relation between a desired peak power suppression amount $\Delta P_{pep}$ and $l_a$ ($\leqq L$).

More specifically, as a desired peak power suppression amount $\Delta P_{pep}$ increases, an allowable maximum peak power value decreases. In FIG. 4, a signal point series pattern in a kernel exceeding the area shown by area $l_a$ includes not only the maximum amplitude level L but also amplitude level l smaller than the value L. ($l_a \leqq l \leqq L$)

In a kernel consisting of κ-carriers, although in principle it is possible to encode according to allowed distribution for each amplitude level, this coding method is not practical. Therefore, it is to be considered that the coding is performed only in the case that entire κ -carriers in a kernel have amplitude levels not smaller than $l_a$, without coding in other cases than mentioned above.

However, in this case, error correction capability is lost because the minimum distance is not expanded.

Now, as an example of signal point allocation of the phase modulation system with amplitude modulation, there will be studied cases of 16-QAM shown in FIG. 5 and 8-APSK shown in FIG. 6.

The former case has three amplitude levels and can be regarded as having QPSK signal point allocation in each value. In the second level, two pairs of QPSK has an offset of $\Delta\theta' = \pm (\pi/4 - 2\arctan 1/3)$.

In particular, the second level is regarded as a special 8-QPSK having non-uniform distances between signal points .

The 8-APSK shown in FIG. 6 has two amplitude levels. For each of these amplitude levels, QPSK is allocated on an identical phase. In this example, each amplitude level has M (multiphase) -PSK signal points and it is possible to encode only when entire κ-carriers in a kernel have amplitude levels not smaller than $l_a$ (for example, $l_a = 2$ in case of 16-QAM), as mentioned earlier.

However, in case of 16-QAM shown in FIG. 5, the second level has an offset against the first and third levels. Therefore, it is not possible to use these levels as they are as a pair for generating phase difference.

For example, if it is intended to realize $\Delta\theta = \pi$, it is not possible because there exists the offset $\Delta\theta'$ between the second level and the first or third level at any time.

In order to realize $\Delta\theta = \pi$, there is required a restriction that the entire kernel must be either in the second level or in the first or third level, which necessitates complex control.

In order to apply the invention of the prior application to such a modulation system, according to the present invention, first, phase spaces of $2\pi$ are classified into several of a plurality of groups. Next, virtual representative points (center points) are taken into consideration.

As for such a virtual representative point, it is possible to consider the center of gravity among the signal points in a group being normalized by the maximum amplitude level for the amplitude of the signals only. In other words it is not always necessary to adopt any existent modulation signal point.

Through this procedure, the entire modulation signal points are converted into MPSK modulation system based on the aforementioned virtual representative points. Namely, by considering as MPSK modulation system by means of virtual representative points, it becomes possible to apply the method of the invention of the prior application specified only by the phase difference condition.

For example, in the examples shown in FIGS. 5, 6, it is possible to classify into four groups I to IV having a phase angle $\pi/2$. In these examples, each quadrant in the two-dimensional I/Q space can be regarded as a group. Here, there are adopted four virtual representative points VRP at the maximum amplitude level, as shown in the figure.

This is equivalent to the case of QPSK modulation in the invention of the prior application. Further, in each group I to IV of 16-QAM (FIG. 5) and 8-APSK (FIG. 6), there are provided four (4) signal points and two (2) signal points , respectively. Therefore, each signal point can be expressed by 2 bits and 1 bit, respectively.

In order to illustrate the effect of the present invention, hereafter a synthetic modulation signal model of a kernel in the multicarrier modulation is considered. Because the invention of the prior application is considered based on the kernel, by confirming peak power suppression effect in the kernel, it can apparently be understood that an equivalent effect can be obtained in the entire carriers $N = \kappa n$.

For the sake of simplification, this model is considered for a basic code ($\kappa = 4$). The signal points to be considered in the present invention lies in the most outside circle i.e. in the maximum amplitude level. For this reason, the normalization is performed using this maximum amplitude level.

Further, it may produce no problem if it is assumed that only one carrier produces a phase error because only a relative phase difference is considered in the invention of the prior application. Also, it can be assumed that a carrier producing an amplitude difference caused by the amplitude modulation, in other words an amplitude error, is identical to the aforementioned carrier producing the phase error. These two events do not rely on carrier location from the viewpoint of peak power.

Here, in MPSK modulation, amplitude levels in each carrier are constant. In case that these amplitude levels are normalized, a synthetic modulation signal after N-carrier modulation can be expressed by the following formula (3).

$$s_N(t) = \frac{1}{\sqrt{N}} \sum_{i=1}^{N} e^{j(2\pi f_i t + \theta i)} \qquad (3)$$

Each carrier frequency is fi= (i-1)Δf (1 ≦ i ≦ N) and a carrier phase is assumed to be θi.

From the above-mentioned example, the respective carrier frequencies in the 4-carrier kernel ($f_1$, $f_2$, $f_3$, $f_4$) = (0, pΔf, qΔf, (p+q)Δf). Also, Δθ(2) = $\theta_1 - \theta_2$ and Δθ*(2) = $\theta_3 - \theta_4$.

Assuming the amplitude error is α (0 ≦ α ≦ 1) and phase error Δθ' (<< 1), a amplitude/phase error model in 4-carrier kernel when Δφ(4) =π +Δθ' can be expressed as follows:

$$s_4(t) = \frac{1}{\sqrt{4}} \left\{ \sum_{i=1}^{3} e^{j(2\pi f_i t + \theta i)} + \alpha e^{(j2\pi f_4 t + \theta_4)} \right\} \qquad (4)$$

and,

$$s_4(\theta) = \frac{1}{2} \left\{ \left(1 + e^{j\theta}\right) + \gamma^{\varpi} \left(1 - \alpha e^{j(\theta - \Delta\theta')}\right) \right\} \qquad (5)$$

where,

$$\theta = 2\pi\, p\, \Delta\, ft + \Delta\theta \qquad (2)$$

$$\gamma^{\bar{\omega}} = e^{j2\pi q \Delta ft}$$

Here,

as Δθ' << 1,

*cos* Δ θ' ≈ 1

*sin* Δθ' ≈ Δθ'

Therefore, the peak power of the synthetic modulation signal becomes;

$$\max\left\|S_4^{\,2}(\theta)\right\| = \left\{\frac{1}{2}\left(\sqrt{2(1+\cos\theta)} + \sqrt{1 + (1 + \Delta\theta'^2)\alpha^2 - 2\alpha(\cos\theta - \Delta\theta'\sin\theta)}\right)\right\}^2 \qquad (6)$$

Using formula (6), amplitude error α versus peak power suppression performance in the kernel is shown in FIG. 7. Also, phase error θ' versus peak power suppression performance in the kernel is shown in FIG. 8.

As can be seen from FIG. 7, it is understood that at α ≧ 0.17, peak power suppression amount: $\Delta P_{pep}(4)$ ≧ 3[dB] is satisfied. Also, in FIG. 8, it is shown that a degradation of peak power suppression: $\Delta P_{pep}(4)$ increases in accordance with phase error Δθ'.

(a) Discussion on the case of MAPSK

Grouping in MAPSK is carried out according to phase condition included in each amplitude level, as mentioned earlier. For example, in the case of 8-APSK shown in FIG. 6, four groups I to IV are provided.
This may be regarded equivalent to the case of QPSK in the invention of the prior application, by adding one bit for amplitude information for the two (internal and external) conditions.
Hereinafter, this information bit is referred to as a signal point identification bit within a group. Because of this additional bit, coding rate becomes greater than in the case of multiphase shift keying system (MPSK) though the basic configuration is identical to MPSK.
From the performance viewpoint, phase error is not produced in MPSK. Therefore, it is sufficient to consider an influence caused by amplitude error $\alpha$ shown in FIG. 7. In the case of amplitude level L ($\geqq$ 2), any integer value L which satisfies;

$$\frac{1}{1+(L-1)d} \geq 0.17 \qquad (7)$$

becomes a possible amplitude level. (Here, d: minimum distance between signal points)
For example, each amplitude level becomes L $\leqq$ 4 in case of QPSK ($d = \sqrt{2}$ ), therefore no degradation is performed up to 16-APSK.
Meanwhile, each amplitude level becomes L $\leqq$ 9 in case of 8-PSK ($d = 2-\sqrt{2}$ ).

(b) Discussion on the case of MQAM

Grouping in MQAM is carried out on a signal-point-group basis which is existent in a certain phase range. Thus, it becomes possible to apply the identical algorithm to MPSK. For example, in a signal point allocation in 64-QAM system shown in FIG. 9, it is possible to provide several of a plurality of phase ranges. Namely;

1. Four groups (four quadrants) each having a phase range of $\pi/2$,
2. Eight groups each having a phase range partitioned by broken lines shown in FIG. 9,

or the like.
Here, the former case has virtual representative points (a, c, e and g) which are identical to the case of QPSK, added by four bits of signal point identification information within the group. The latter case has virtual representative points of 8-PSK (a, b, c, d, e, f, g, h) + three bits of signal point identification within the group.
In particular, with regard to the latter case, virtual representative points each having uniform 8-PSK signal point interval is obtained, though phase ranges dividing the groups are not uniform. Therefore, the identical algorithm of the invention of the prior application described earlier can be applied.
Additionally, even though virtual representative points are not uniform, it is possible to regard as uniform when performance degradation is tolerable to some extent. Needless to say, as a phase range specifying a group is set smaller, degradation of peak power suppression performance becomes suppressed.
On the other hand, because the number of bits for the signal point identification information within the group becomes reduced, the code rate becomes decreased. Further, there is a defect of inevitable increase in system complexity because, first, bit mapping of the signal point within the group becomes complicated and, secondly, a common encoder cannot be employed to cope with a case of different phase ranges depending on the modulation indexes.
From a performance viewpoint, because of both amplitude and phase errors in MQAM, a peak power suppression can be known by substituting into above formula (6) the amplitude and phase errors of each MQAM signal point.
FIGS. 10, 11 show peak power suppression on each signal points of 16-QAM shown in FIG. 5 and of 64-QAM shown in FIG. 9, respectively, assuming that the aforementioned grouping on a QPSK basis explained before is carried out.
Here, the signal point numbers shown in FIGS. 10, 11 correspond to the signal point numbers shown in parentheses in FIGS. 5, 9, respectively.
Referring to FIG. 10, in case of 16-QAM shown in FIG. 5, peak power suppression amount $\Delta P_{pep}$ = 2.6 [dB] (degradation: 0.4 [dB] = 3.0 - 2.6) is obtained at signal points of number (2) and number (3). Also, referring to FIG. 11, it is understood that in case of 64-QAM shown in FIG. 9, peak power suppression amount $\Delta P_{pep}$ = 2.3 [dB] (degradation: 0.7 [dB] = 3.0 - 2.3) is obtained at signal points of number (4) and number (13).
Further, the difference between an approximation model value A obtained from formula (6) and a simulation result B obtained from actual peak power measurement is 0.03 [dB] or smaller. Accordingly, an effect of the present invention is confirmed by this embodiment model.

From the result described above, an ideal coding rate of the present invention $R'_{2^{k+1}}$ (n, m) in the cases of (a) MAPSK and (b) MQAM is derived from the following formula, assuming the number of phase states by the grouping, that is a modulation index of MPSK, is m' ($\leqq$ m), and in case code length $\kappa = 2^{k+1}$;

$$R'_{2^{k+1}}(n,m',m) = \frac{\log_2\left\{P_{2^{k+1}}(n,m') \times 2^{2^{k+1}(m-m')n}\right\}}{2^{k+1}mn} = R_{2^{k+1}}(n,m') \times \frac{m'}{m} + \frac{m-m'}{m} \quad (8)$$

For example, MPSK modulation index m' = 2, when grouping on a QPSK basis is carried out. Also, the minimum free distance of the code at code length $\kappa = 2^{k+1}$ becomes $d_{min} = \sqrt{2^{k-1}}d$ when grouping is carried out for a certain phase range and a signal point within this group is a through bit (i.e. non-coding).

More specifically, in case of basic code (k = 1), $d_{min} = d$ is obtained after grouping processing is carried out. The expansion of the minimum free distance as a result of code extension becomes a restriction condition of phase difference only, which is equivalent to the case of the invention of the prior application. The number of expansion times of the minimum free distance against the code length is fewer by one time.

Therefore, according to the present invention, at code length $\kappa = 2^{k+1}$, peak power (PEP) suppression amount: $\Delta P_{pep}(2^{k+1}) = 3k - \beta$ [dB] ($\beta$ ($\geqq$ 0): degradation caused by amplitude/phase error) is realized, as well as the minimum free distance of the code: $d_{min} = \sqrt{2^{k-1}}d$ .

As can be understood by the aforementioned description, in a system for commonly amplifying a plurality of carriers N(= κn: κ is code length), the present invention is based on the premise of applying the invention of the prior application, in which peak power (or peak-to-average power ratio) is suppressed by phase difference of signal points at a certain constant value in a plurality of carriers having certain constant intervals with an error correction capability being provided by expanding the minimum free distance of the code.

According to the present invention, in an amplitude/phase modulation system having $2^m$ value (m>m'), phase space is divided into $2^{m'}$ groups. Thereafter the representative points of the group are regarded as $2^{m'}$-PSK signal points and the aforementioned phase difference condition is applied to select signal points in each group by $2^{m-m'}$ through bits (information bits).

Accordingly, at code length $\kappa = 2^{k+1}$, peak power (or peak-to-average power ratio) is suppressed by approximately 3k [dB] and the minimum free distance: $d_{min}$ is expanded by $\sqrt{2^{k-1}}$ , thus enabling to generate code having error correction capability.

[First embodiment]

FIG. 12 shows a configuration example of the encoder in which the algorithm of the present invention is realized by applying to $2^m$-level amplitude/phase modulation.

The encoder in accordance with this embodiment is constituted by a $2^{m'}$-PSK subset phase generator 1, 2n sets of subset mappers 2, and a subset interleaver 3. Hereafter there is described a configuration example in which signals are divided into $2^{m'}$-PSK groups in a $2^m$-state amplitude/phase modulation system (m' $\leqq$ m).

In order that signal points of the basic subset of κ/2-carriers are selected independently of the extended subset of κ/2-carriers, signal point identification information of both the basic subset and the extended subset are independently assigned as through bits.

Because this necessitates the number of information bits equivalent to a subset length per subset, signal points are determined by the signal point identification information bits within the group having (m - m' ) bits per kernel, in other words totally (m - m')κn bits.

Here, the number of input bits to the encoder is defined as C + z. The number of input bits C is the number of input bits to the encoder when $2^{m'}$-PSK is applied, which is shown by the following formula:

$$C = \lfloor \log_2 P_{2^{k+1}}(n,m') \rfloor$$

where, symbol $\lfloor x \rfloor$ denotes a maximum integer not exceeding x (round off), and symbol $\lceil x \rceil$ denotes a minimum integer not smaller than x (round up). These may be applied through the succeeding description of the embodiments.

Because the additional bits are assigned as through bits for the entire carriers, the number of additional bits z being added by applying 2m-state amplitude/phase modulation system becomes; z = (m-m')κn.

Also, the number of output bits being output from the encoder becomes; D + z = κ mn, when the number of output bits D in case of adopting $2^{m'}$-PSK is D = κm'n.

According to the present invention, a required number of interleaving bits is uniquely determined for MPSK modulation index m' being grouped and the number of kernels n. In regard to this number of interleaving bits, assuming that the total number of subsets which satisfy a phase difference condition (for example, the aforementioned formula (1)) given for a kernel in $2^{m'}$-PSK group is S(m'), and in case n kernels are constituted by subset pairs of i categories (1 ≦ i ≦ λ = min (n, S(m'))), the number of interleaves C(n,i,m') is;

$$C(n,i,m') = \begin{cases} S(m')C_i \times \dfrac{(2n)!}{(n!)^2} & i=1 \\ S(m')C_i \times \left\{ \sum_{n_1=1}^{N_1} \sum_{n_2=1}^{N_2} \mathrm{K} \sum_{n_{i-1}=1}^{N_{i-1}} \left\{ \dfrac{(2n)!}{\Pi_{j=1}^{i}(n_j!)} \right\} \right\} & i \geq 2 \end{cases} \quad (9)$$

where, $n_j$ denotes the number of kernels in which signal patterns belonging to the j-th group (1 ≦ j ≦ i) are assigned, and $n_j$ > 1. Further by defining $n_0$ = 1, the possible range of values for each $n_j$ is;

$$1 \leq n_j \leq n - \sum_{C=0}^{j-1}(n_{C-1}) \qquad (1 \leq j \leq i-1)$$

and, $N_j$ denotes the maximum value of each $n_j$. Also, the summation thereof, which denotes the total number of interleaves C(n,m') is given by;

$$C(n,m') = \sum_{i=1}^{\lambda} C(n,i,m') \qquad \lambda = min(n,S(m')) \quad (10)$$

Therefore, the required number of interleaving bits becomes $\lfloor log_2 C(n,m') \rfloor = x$ bits.

In the configuration shown in FIG. 12, among the input information bits (C + z), first z = κ(m - m')n bits are given on a (m - m' ) bits/carrier basis, namely κ (m - m')/2 [bits/subset], as the signal point identification information within the group of each carrier. The signal point mapping is carried out by adding to the group mapping signals after interleaving is performed on a subset basis for the entire carriers in subset interleaver 3.

Thereafter x bits are input to subset interleaver 3 as a subset interleaving control signal, and the remainder (C - x) bits are input to $2^{m'}$-PSK subset phase generator 1 to select a group enabling peak power suppression.

The group mapping control signal being output from $2^{m'}$-PSK subset phase generator 1 is generated so that virtual representative points of $2^{m'}$-PSK satisfy, for example, formula (1). In this combination here, the identical combination is selected continuously, instead of depending on the input bits.

Also, this combination may be determined arbitrarily. However, the subset phase generation for the basic configuration depends on an interleaving control signal value consisting of x bits being input to subset interleaver 3.

In other words, the control signal value also represents by what pair category the basic 2n-subset series are constituted.

Thus, in $2^{m'}$-PSK subset phase generator 1, a group mapping control signal consisting of m'κ/2 x 2n bits, i.e.

κm'n bits, having one to one correspondence with C-x bits is generated.

In subset mappers 2 consisting of 2n sets, a subset, or κ/2 virtual representative points, is output according to the input group mapping control signal consisting of m'κ/2 bits (group mapping).

In subset interleaver 3, the present invention utilizes that no positional relation is fixed on the frequency axis between continuous subset pairs which satisfy, for example, formula (1). Namely, this signifies that not only a group mapping signal but also a signal point mapping signal of continuous κ/2 carriers being output from 2n subset mappers 2 may be allocated on arbitrary positions on the frequency axis.

Therefore, the group mapping signal is interleaved on an m' κ/2 bit basis by an input x-bit interleaving control signal in regard to n-pairs of kernels generated by subset phase generator 1 (here, the kernels are specified on a group level basis, and signal points have not been fixed yet).

Finally, by adding signal point identification information within the group, which consists of (m-m') bits, being input on a carrier-by-carrier basis to the group mapping signal, $2^m$-state amplitude/phase modulation signal is output (signal point mapping).

Thus, the signal point mapping signal consisting of m' + (m - m') = m bits per carrier, namely κmn bits as a whole, is output.

[Second embodiment]

In the coding algorithm of the aforementioned first embodiment, when application to MQAM modulation is considered, degradation in peak power suppression performance is produced at all times caused by phase error. Further, in case the code length is extended (k ≧ 2) from the basic code (k = 1), the phase error is superposed, which results in an increase of degradation.

Here, for the sake of simplification, a system based on the case of m' = 2 in 16-QAM (refer to FIG. 5), namely, QPSK is considered hereafter. In this case, among four bits representing signal points in each carrier, m' = 2 bits i.e. the group identification bits represent quadrant information. Further, the remainder signal point identification information bits within the group becomes two bits so as to select one of the four signal points within the group.

In the aforementioned first embodiment, the quadrant information is encoded so as to satisfy formula (1), and the signal point identification information bits within the group are used as through bits . (It may also be possible to have different mappers of signal points within the group to be provided on a group-by-group basis. However, the description hereafter is based on an assumption of using as through bits.)

Now, when extending the code length to $\kappa = 2^{k+1}$ (k ≧ 2), a subset of $2^k$-carrier, which is a kernel having a code length of $\kappa = 2^k$, is referred to as a basic subset. Also, a subset of $2^k$-carrier to which phase difference is applied to the basic subset is referred to as an extended subset.

In the case of this extension, mapping is carried out so that error is not produced in the phase difference between the basic subset and the extended subset (Δθ' = 0). More specifically, the group identification bits (2 bits) in the extended subset are mapped so as to satisfy, for example, Δθ = π. Meanwhile, the signal point identification information bits (2 bits ) within the group are mapped using the same as the basic subset.

By means of the second embodiment, the peak power suppression in case of extension is improved (degradation is reduced) as compared to the first embodiment. However, in the case of the first embodiment, because the signal point identification information bits within the group are used as through bits, this directly contributes to an increase of coding rate.

In contrast, according to the second embodiment, the aforementioned effect is lost because the signal point identification information bits within the group is uniquely determined.

By means of the extension in the second embodiment, the number of code patterns is increased only by group identification bit m' in the extended subset. Therefore;

$$P''_{2k+1}(n,m',m) = 2^{m'n} \times P''_{2k}(n,m) \qquad (k \geq 2) \tag{11}$$

Here, because of no extension processing in case of the basic code (k = 1), the result is identical to the aforementioned first embodiment. Accordingly, the ideal coding rate of the second embodiment is given by the following formula:

$$R''_{2^{k+1}}(n,m',m)=\begin{cases}R_4(n,m')\times\frac{m'}{m}+\frac{m-m'}{m} & k=1\\ R''_{2^k}(n,m)\times\frac{1}{2}+\frac{m}{2^{k+1}m} & k\geq 2\end{cases} \quad (12)$$

As can be understood from the above description, according to the second embodiment, the through bits (information bits) which are identical to the $2^k$-carrier basic subset are copied to the $2^k$-carrier extended subset when selecting each carrier signal points in case of extending the code length to $\kappa = 2^{k+1}$ ($k \geqq 2$). Thereby it becomes possible to generate a code having reduced degradation in peak power suppression with an eliminated phase error produced in extending the code length.

FIG. 13 shows a diagram illustrating a configuration example of an encoder to implement the above-mentioned second embodiment. The encoder of this embodiment is constituted by a $2^{m'}$-PSK subset phase generator 1, 2n sets of subset mappers 2, and a subset interleaver 3, which are similar to the aforementioned first embodiment.

Hereafter a configuration example of dividing into $2^{m'}$-PSK groups in a $2^m$-state amplitude/phase modulation system is described. The signal points are selected so that the $\kappa/2$-carrier basic subset produces no phase error against the $\kappa/2$-carrier extended subset. To realize this, the signal point identification information within the group of the basic subset is directly copied into the extended subset without modification.

Therefore, because the number of information bits having a length equivalent to the subset length is required per kernel, signal points are determined by the signal point identification information within the group consisting of $(m - m')\kappa/2$ bits per kernel, or $(m - m')\kappa/2n$ bits totally.

Here, the number of input bits to the encoder is defined as C + z. The number of input bits C is the number of input bits to the encoder when $2^{m'}$-PSK is applied, which is shown by the following formula:

$$C = \lfloor \log_2 P_{2^{k+1}}(n,m') \rfloor$$

The number of additional bits z being added by applying $2^m$-state amplitude/phase modulation system is $z = (m-m')\ \kappa/2n$, because the additional bits are assigned as through bits for the entire carriers.

Also, when the number of output bits being output from the encoder is defined as $D = \kappa m'n$, the following formula is given:

$$D + 2z = \kappa mn$$

The total number of interleaves C(n,m') in this second embodiment is shown in formula (10), which is identical to the aforementioned first embodiment. The coding rate in the basic code (k = 1) is also identical to the first embodiment. However, the extension method of the code length $\kappa = 2^{k+1}$ is different.

Namely, the code length extension is carried out by selecting signal points so that no phase error is produced against the entire $2^k$-carrier extended subsets from the $2^k$ (= $\kappa/2$)-carrier basic subsets. Therefore, the required number of interleaving bits becomes $\lfloor \log_2 C(n,m') \rfloor = x$ bits.

In the configuration according to the second embodiment, among the input information bits (C + z ) , first $z = \kappa(m - m')\ \kappa/2n$ bits are given against the basic subset on a (m - m') bits/carrier basis as the signal point identification information within the group of each carrier.

Further, by copying the identical information to the basic subset as the signal point identification information within the group to be added to the extended subset, occurrence of phase error is prevented. In other words, the signal point mapping is carried out by adding $\kappa/(m - m')/2$ [bits/kernel] to the group mapping signals after interleaving is performed on a subset basis for the entire carriers.

Thereafter x bits are input to subset interleaver 3 as a subset interleaving control signal, and the remainder (C - x) bits are input to $2^{m'}$-PSK subset phase generator 1 to select a group enabling peak power suppression.

The group mapping control signal being output from $2^{m'}$-PSK subset phase generator 1 is identical to the aforementioned first embodiment. Thus, in $2^{m'}$-PSK subset phase generator 1, a group mapping control signal consisting of $m'\kappa/2 \times 2n$ bits, or $\kappa m'n$ bits, having one to one correspondence with C-x bits is generated.

In subset mappers 2 consisting of 2n sets, a subset, or $\kappa/2$ virtual representative points, is output according to the input group mapping control signal consisting of $m'\kappa/2$ bits (group mapping).

In subset interleaver 3, this embodiment utilizes that no positional relation is fixed on the frequency axis between continuous subset pairs which satisfy, for example, formula (1). Namely, this signifies that not only a group mapping signal but also a signal point mapping signal of continuous κ/2 carriers being output from 2n subset mappers 2 may be allocated on arbitrary positions on the frequency axis.

Therefore, the group mapping signal is interleaved on an m' κ/2 bit basis by a x-bit interleaving control signal being input to subset interleaver 3 in regard to n-pairs of kernels generated by subset phase generator 1 (here, the kernels are specified on a group level basis, and signal points have not been fixed yet).

Finally, by adding (m - m') bit signal point identification information within the group being input on a carrier-by-carrier basis to the group mapping signal, $2^m$-state amplitude/phase modulation signal is output (signal point mapping).

Thus, the signal point mapping signal consisting of m' + (m - m') = m bits per carrier, namely κmn bits as a whole, is output.

[Third embodiment]

By applying the coding algorithm according to the aforementioned second embodiment, degradation of peak power suppression can be reduced. However, there arises a tradeoff relation that degradation of the coding rate is increased.

For this reason, as a third embodiment, the signal point identification information bits within the group are made to through bits against at least one carrier or more in the $2^k$-carrier extended subset. This enables to obtain an intermediate value between the aforementioned first and second embodiment in regard to the performances on both peak power suppression and coding rate.

The number of code patterns according to the third embodiment is uniquely determined as $2^{m-m'}$ patterns resulting from through bits in the i carrier ($1 \leqq i < 2^k$), and the group identification bits m' in the remainder carriers (which is identical to the aforementioned second embodiment), and the number of choices of i-carrier for making through bits is ${}_{2k}C_i$. Therefore, the number of code patterns is;

$$P^*_{2^{k+1}}(n,m',m,i) = \left\{2^{m'} \times 2^{(m-m')i} \times {}_{2^k}C_i\right\}^n \times P^*_{2^k}(n,m) \quad (k \geq 2) \tag{13}$$

Here, because there is no extension processing in the basic code (k = 1), this results in the same as the aforementioned first embodiment. Therefore, the ideal coding rate in this third embodiment is given by;

$$R^*_{2^{k+1}}(n,m',m,i) = \begin{cases} R_4(n,m') \times \dfrac{m'}{m} + \dfrac{m-m'}{m} & k = 1 \\ R^*_{2^k}(n,m,i) \times \dfrac{1}{2} + \dfrac{mi + (1-i)m' + \log_2 {}_{2^k}C_i}{2^{k+1}m} & k \geq 2 \end{cases} \tag{14}$$

Further, the ratio of carriers in which through bits are introduced becomes constant by setting i = 2k' (k' < k). This produces a constant degradation caused by the code length.

For example, when i = 1 (k' = 0), formula (14) becomes;

$$R^*_{2^{k+1}}(n,m',m,1) = \begin{cases} R_4(n,m') \times \frac{m'}{m} + \frac{m-m'}{m} & k=1 \\ R^*_{2^k}(n,m,1) \times \frac{1}{2} + \frac{m+k}{2^{k+1}m} & k \geq 2 \end{cases} \quad (15)$$

In this third embodiment, when extending the code length to $\kappa = 2^{k+1}$ ($k \geqq 2$), the through bits (information bits) are applied to the $2^k$-carrier extended subset from the $2^k$-carrier basic subset for any one $2^k$-carrier or more. Thereby it becomes possible to generate a code having reduced degradation peak power suppression with an eliminated phase error.

FIG. 14 shows a configuration example of an encoder to implement the third embodiment. Because this third embodiment is provided with an intermediary algorithm between the first embodiment and the second embodiment, the encoder of the third embodiment has functions provided in both the first embodiment and the second embodiment.

For this purpose, the encoder of the third embodiment includes n additional bit controllers 4 so as to add signal point identification information within the group on a kernel-by-kernel basis, in addition to $2^{m'}$-PSK subset phase generator 1, 2n subset mappers 2, and subset interleaver 3.

Hereafter a configuration example of dividing into $2^{m'}$-PSK groups in a $2^m$-state amplitude/phase modulation system is described.

At this time, the signal points are selected so that the $\kappa/2$-carrier basic subset produces no phase error against the $\kappa/2$-carrier extended subset, except for any one carrier or more.

Assuming the number of carriers y ($<\kappa/2$) which produce a phase error among subset length $\kappa/2$, the through bits are set for y carriers so as to select signal point independently. For the remainder ($\kappa/2$-y) carriers, the signal point identification information within the group in the basic subset is copied into the extended subset without modification. In such a way, the above-mentioned signal point selection is carried out.

Further, in order to select y carriers among the extended subsets, $K = \lfloor \log_2 {}_{2k}C_i \rfloor$ is required. Therefore, the number of y-carrier selection bits K is required per kernel in addition to the information bits for carriers in the extended subset as well as the basic subset length for the through bits.

In such a way, the signal points are determined by the signal point identification information within the group consisting of $(m - m')\kappa/2 + y(m - m') + K$ bits per kernel, that is, totally, $(m - m')n\kappa/2 + y(m - m')n + Kn$ bits.

Here, the number of input bits to the encoder is defined as C + z. The number of input bits C is the number of input bits to the encoder when $2^{m'}$-PSK is applied, which is shown by the following formula:

$$C = \lfloor \log_2 P_{2^{k+1}}(n,m') \rfloor$$

The number of additional bits z being added by applying $2^m$-state amplitude/phase modulation system becomes $z = (m - m')n\kappa/2 + y(m - m')\kappa n + Kn$.

Also, when the number of output bits being output from the encoder is defined as $D = \kappa m'n$, the following formula is given:

$$D + (m - m')\kappa n = \kappa mn$$

The total number of interleaves C(n,m') in this second embodiment is shown in formula (10), which is identical to the aforementioned first embodiment.

The coding rate in the basic code (k = 1) is also identical to the first embodiment. However, the extension method of the code length $\kappa = 2^{k+1}$ is different.

Namely, the code length extension is carried out by selecting signal points so that no phase error is produced against the $2^k$-carrier extended subsets from the basic subsets of $2^k$ ($= \kappa/2$) -carrier, except for y-carrier ($1 \leqq y < 2^k$).

Therefore, the required number of interleaving bits becomes $\lfloor \log_2 C(n,m') \rfloor = x$ bits. In the configuration of this embodiment, among the input information bits (C + z), first $(m - m')n\kappa/2$ bits are given against the basic subset on a (m - m') bits/carrier basis as the signal point identification information within the group of each carrier.

Further, signal point identification information within the group of (m - m') bits/carrier is added only to y-carrier among the extended subset. Also, a carrier in which a phase error is permitted is selected by carrier selection bits consisting of K bits. For the remainder (κ /2 - y) carriers in the extended subset occurrence of phase error is prevented by copying the identical information to the basic subset.

In other words, the signal point mapping is carried out by adding κ/(m - m')/2 [bits/kernel] to the group mapping signals after interleaving is performed on a subset basis for the entire carriers.

Thereafter x bits are input to subset interleaver 3 as a subset interleaving control signal, and the remainder (C - x) bits are input to $2^{m'}$-PSK subset phase generator 1 to select a group enabling peak power suppression.

The group mapping control signal being output from $2^{m'}$-PSK subset phase generator 1 is identical to the aforementioned first embodiment. Thus, in $2^{m'}$-PSK subset phase generator 1, a group mapping control signal consisting of m'κ/2 x 2n bits, or κm'n bits, having one to one correspondence with C-x bits is generated.

In subset mappers 2, a subset, or κ/2 virtual representative points, is output according to the input group mapping control signal consisting of m'κ/2 bits (group mapping). In subset interleaver 3, this embodiment utilizes that no positional relation is fixed on the frequency axis between continuous subset pairs which satisfy, for example, formula (1).

Namely, this signifies that not only a group mapping signal but also a signal point mapping signal of continuous κ/2 carriers being output from 2n subset mappers 2 may be allocated on arbitrary positions on the frequency axis.

Therefore, the group mapping signal is interleaved in subset interleaver 3 on an m'κ/2 bit basis by an input x-bit interleaving control signal in regard to n-pairs of kernels generated by subset phase generator 1 (here, the kernels are specified on a group level basis, and signal points have not been fixed yet).

Finally, the signal point identification information within the group having (m - m') bits being input on a carrier-by-carrier basis is assigned by n additional bit controllers 4. More specifically, among the basic subset and the extended subsets in which phase error is permitted, (m - m') bits are added as through bits for y carriers, and the identical (m - m') bits to the corresponding basic subset are added for the other (κ/2 - y) carriers.

By adding the signal point identification information within the group for each kernel generated in additional bit controller 4 to the group mapping signal, $2^m$-state amplitude/phase modulation signal is output (signal point mapping). Thus, the signal point mapping signal consisting of m' + (m - m') = m bits per carrier, namely κmn bits as a whole, is output.

[Fourth embodiment]

Among multicarrier transmission systems, there is a system which provides different modulation systems on a carrier-by-carrier basis, such as in ground-wave digital broadcasting systems. FIG. 15 shows an example of multicarrier transmission system in which different modulation systems are coexistent (as an example, QPSK and 16-QAM) provided that the modulation system in each carrier is fixed (in other words, the modulation systems are not changed dynamically by any conditions).

In the fourth embodiment, peak power suppression is performed by phase (difference) conditions. By further applying each of the aforementioned embodiments, this effect can also be brought about in the modulation system which includes amplitude modulation.

When different modulation systems are coexistent within one kernel, such situation can be coped with by performing only grouping (coding) in case of MPSK, as well as by performing grouping (coding) plus amplitude information (through bit, or non-coding).

The generality is not lost even when code extension is carried out. For example, as shown in FIG. 15, in case QPSK and 16-QAM are mixed, two bits of relative phase generation bits are assigned for a QPSK carrier to group on a QPSK basis, while two bits of relative phase generation bits plus two through bits are assigned for a 16-QAM carrier.

Assuming k = 1, the relative phase generation algorithm outputs signal points of QPSK phase difference generation pairs which satisfies formula (1). Here, these pairs are (π, 0) and (π/2, -π/2). Signal point series satisfying these pairs are output as a group value. (This becomes the signal point value without any modification in case of MPSK.)

In regard to 16-QAM, through bits consisting of two bits on a carrier basis are used to select one signal points out of four within the group concerned. For example, in such a system in which fixed modulation systems are independently coexistent, grouping is performed in $2^{m'}$-PSK and, for the sake of simplicity, different modulation systems are employed on a subset basis.

At this time, among the total number of carriers N = κn, it is assumed that the number of subsets performing PSK modulation is $n_1$, the number of subsets performing modulation which includes amplitude modulation (modulation index: m (> m')) $n_2 = 2n - n_1$. Then, the ideal coding rate of the present invention in case of the code length $\kappa = 2^{k+1}$ is;

$$R^{*}_{2^{k+1}}(n,m',m)=\frac{\log_2\left\{P_{2^{k+1}}(n,m')\times 2^{2^{k}(m-m')n2}\right\}}{2^{k+1}m'n+2^{k}(m-m')n_2} \quad (16)$$

Formula (16) coincides with formula (8) at $n_2 = 2n$. The generality of the present invention is not lost even when different modulation systems are coexistent on a carrier-by-carrier basis, needless to say, although the aforementioned coding rates are different.

Accordingly, using the coding algorithm of the forth embodiment, by employing different modulation systems on a carrier-by-carrier basis, it becomes possible to apply the present invention to systems more widely.

FIG. 16 shows an encoder configuration, in which the aforementioned fourth embodiment is implemented. The encoder of this embodiment is based on the premise shown in the description of the fourth embodiment. Grouping is performed in $2^{m'}$-PSK. Further, for the sake of simplicity, it is assumed that different modulation systems are employed on a subset basis, and that the adopted modulation systems are two types, $2^{m'}$-PSK and $2^{m}$-level amplitude/phase modulation system.

At this time, among the total number of carriers $N = \kappa n$, it is assumed that the number of subsets performing PSK modulation is $n_1$, the number of subsets performing modulation which includes amplitude modulation (modulation index: m (> m')) $n_2 = 2n - n_1$. The encoder of this embodiment is constituted by a $2^{m'}$-PSK subset phase generator 1, 2n sets of subset mappers 2, and a subset interleaver 3. Hereafter a configuration example of dividing into $2^{m'}$-PSK groups, and applying $2^{m}$-state amplitude/phase modulation system for $n_2$ subsets is described (m' ≦ m).

For each carrier in $n_2$ subsets, information bits similar to the aforementioned first embodiment are given. Namely, modulation signal points are determined by adding signal point identification information bits within the group consisting of $(m - m')\, n_2\kappa/2$ bits for $n_2$ subsets.

In $n_1$ subsets in which $2^{m'}$-PSK is applied, the group mapping signals consisting of $m'\,\kappa/2$ [bits/subset] become signal point mapping signals without any modification.

Here, the number of input bits to the encoder is defined as C + z. The number of input bits C, which is the number of input bits to the encoder when $2^{m'}$-PSK is applied, becomes;

$$C = \lfloor \log_2 P_{2k+1}(n,m') \rfloor$$

The number of additional bits z being added by applying $2^{m}$-state amplitude/phase modulation system becomes $z = (m - m')n_2\kappa/2$ because of addition to $n_2$-carrier only.

Also, assuming the number of encoder output bits $D = \kappa m'n$, the number of output bits from the encoder becomes; $D + z = \kappa mn$.

The total number of interleaves C(n,m') in this fourth embodiment is identical to formula (10) in the aforementioned first embodiment. Therefore, the required number of interleaving bits becomes $\lfloor \log_2 C(n,m') \rfloor = x$ bits. In the configuration of this embodiment, among the input information bits (C + z), first $z = \kappa(m - m')n_2/2$ bits are given as the signal point identification information within the group of each carrier in $n_2$ subsets on a (m - m') bits/carrier basis, or $\kappa(m-m')/2$ [bits/subset]. These are added to the group mapping signals after interleaving is performed, and thus the signal point mapping is carried out.

Thereafter x bits are input to subset interleaver 3 as a subset interleaving control signal, and the remainder (C - x) bits are input to $2^{m'}$-PSK subset phase generator 1 to select a group which enables peak power suppression.

The group mapping control signal being output from $2^{m'}$-PSK subset phase generator 1 is generated so that virtual representative points in $2^{m'}$-PSK satisfies, for example, formula (1). The combination employed here does not depend on the input C-x bit. Instead, the identical combination is selected continuously.

In addition, this combination can arbitrarily determined. Meanwhile, the subset phase generation for the basic configuration differs, depending on x-bit interleaving control signal being input to subset interleaver 3.

In other words, the control signal value also represents of what type of pairs the basic 2n-subset series consist.

Accordingly, in $2^{m'}$-PSK subset phase generator 1, a group mapping control signal consisting of $m'\,\kappa/2 \times 2n$ bits, or $\kappa m'n$ bits, having one to one correspondence with C-x bits is generated. In subset mappers 3, a subset, or $\kappa/2$ virtual representative points, is output according to the input group mapping control signal consisting of $m'\,\kappa/2$ bits (group mapping).

In subset interleaver 3, this embodiment utilizes that no positional relation is fixed on the frequency axis between continuous subset pairs which satisfy, for example, formula (1).

Namely, this signifies that not only a group mapping signal but also a signal point mapping signal of continuous

$\kappa/2$ carriers being output from 2n subset mappers 2 may be allocated on arbitrary positions on the frequency axis.

Therefore, the group mapping signal is interleaved on an m' $\kappa/2$ bit basis by an input x-bit interleaving control signal in regard to n-pairs of kernels generated by subset phase generator 1 (here, the kernels are specified on a group level basis, and signal points have not been fixed yet).

Finally, to $n_2$ subsets only in which $2^m$-state amplitude/phase modulation is applied, $2^m$-state amplitude/phase modulation signal is output by adding (m - m' ) bit signal point identification information within the group being input on a carrier-by-carrier basis (signal point mapping).

For the remainder $n_1$ subsets, the group mapping signal itself is treated as signal point mapping signal. Thus, in $n_2$ subsets, the signal point mapping signal consisting of m' + (m - m') = m bits per carrier, namely $m' n_1\kappa/2 + mn_2\kappa/2 = m'\kappa n + (m - m') n_2\kappa/2$ bits as a whole, is output. This coincides with D + z.

Further, in a mobile communication system, there arises a problem caused by fading which produces variation of received power, resulting in degradation of reception performance and degraded channel capacity. Various technologies have been developed to cope with this problem. As a high efficient transmission technology in a fading channel, an adaptive modulation system has been developed.

Considering this, a method for switching a modulation index corresponding to time-variant received power variation is discussed hereafter. Here, by switching the modulation index corresponding to the received power level, it is intended to increase the transmission capacity.

For example, when received power becomes small caused by fading, a modulation system, such as QPSK, which has small modulation index. Meanwhile, when received power becomes large, another modulation system, such as 64-QAM, which has large modulation index, thus aiming to maintain constant reception quality continuously.

Using this method, transmission rate increases when channel condition is satisfactory, while transmission rate decreases when channel condition is poor. As a whole, average transmission rate becomes increased as compared to the case when a fixed modulation system is employed. Higher efficiency is aimed by avoiding to provide excess quality better than the reception quality required by the system (or redundancy), which is different from a fixed modulation system being implemented under worst-case design.

[Fifth embodiment]

Corresponding to the aforementioned adaptive modulation system, a fifth embodiment is intended to apply the present invention. This embodiment switches modulation system dynamically (temporally) within an identical carrier. In contrast, in the aforementioned fourth embodiment, the modulation system is variable but is fixed in view of the carrier position.

For example, in a system constituted by a frame having a certain number of symbols, grouping is unified on a $2^{m'}$-PSK basis to meet an adaptive modulation system in which a modulation system is changed on a frame-by-frame basis. Thus it becomes possible to provide a relative phase difference generator commonly in a kernel.

Meanwhile, by adding signal point identification information (m - m' ) bits within the group of the modulation system (modulation index: m ( $\geqq$ m')) specified on a carrier-by-carrier basis, the coding algorithm of the present invention is applicable even when an arbitrary modulation system is employed with dynamic alteration.

For example, in case grouping on a QPSK basis is carried out, in order to apply to an adaptive modulation system employing QPSK/16-QAM/64-QAM, a group phase relation according to the QPSK coding algorithm is generated in relative phase generator 1 for the entire carriers in a kernel. Thereafter, mapping to signal point is carried out without modification in case of QPSK. Instead, in case of 16-QAM/64-QAM, signal point mapping is carried out using through bits (or additional bits) of signal point identification information within the group consisting of 2/4 bits, respectively.

However, in this case, it is required to provide a function of switching additional bits for each carrier in a kernel on a frame-by-frame basis. Also, the number of input/output bits in an encoder is dynamically changed on a frame basis.

In the present invention, it is considered that the modulation system applied to each carrier varies at a certain period, for example on a frame-by-frame basis. Hereafter it is assumed that grouping is carried out only by $2^{m'}$-PSK, and that the case of zero modulation index, namely transmission suspension, is not considered. (Note that the effect by the present invention can also be obtained even if the above case of zero modulation index is taken into consideration.)

Under these conditions, it is assumed that j modulation indexes being adopted in the adaptive modulation system are denoted by M = {m1, m2... mj} (mj > ... > m1 $\geqq$ m'), and that, in a certain frame, the modulation index of the p-th carrier ($1 \leqq p \leqq \kappa n$) is $m_p \in M$.

The total number of code patterns is a product of the number of code patterns in case of adopting $2^{m'}$-PSK: $P_2^{k+1}(n, m')$ and the number of pattern produced by modulation index difference in each carrier $2^{mp-m'}$ multiplied for the times of the number of carriers:

$$2^{\sum_{p=1}^{\kappa n}(m_p - m')}.$$

Further, the total number of modulation in multicarriers at this time is

$$2^{\sum_{p=1}^{\kappa n} m_p} = 2^{\kappa m' n + \sum_{p=1}^{\kappa n}(m_p - m')}.$$

Therefore, the ideal coding rate of the present invention in the frame of interest in case of code length $\kappa = 2^{k+1}$ is;

$$R^{+}_{2^{k+1}}(n,m',M) = \frac{\log_2\left\{P_{2^{k+1}}(n,m') \times 2^{\sum_{p=1}^{2^{k+1}n}(m_p - m')}\right\}}{2^{k+1}m'n + \sum_{p=1}^{2^{k+1}n}(m_p - m')}$$
$$= \frac{\log_2 P_{2^{k+1}}(n,m') + \sum_{p=1}^{2^{k+1}n}(m_p - m')}{2^{k+1}m'n + \sum_{p=1}^{2^{k+1}n}(m_p - m')} \qquad (17)$$

Using such an algorithm for a plural modulation system of the fifth embodiment, it becomes possible to provide a highly efficient and high-quality wireless transmission system by realizing an adaptive modulation system in multicarrier transmission having peak power suppression and error correction capability.

FIG. 17 shows a configuration example of an encoder for implementing the aforementioned fifth embodiment. In the encoder in this embodiment, the modulation system being adopted for each carrier varies at a certain period, for example on a frame-by-frame basis.

Here, it is assumed that grouping is carried out only by $2^{m'}$-PSK, and that the case of zero modulation index, namely transmission suspension, is not considered. (Note that the effect by the present invention can also be obtained even if the above case of zero modulation index is taken into consideration.)

Also, it is assumed that j modulation indexes being adopted in the adaptive modulation system are denoted by M = {$m_1$, $m_2$ ... $m_j$} ($m_j$ > ... > $m_1 \geqq m'$). When the number of input bits to the encoder is C + z, the number of variable bits caused by variation of the modulation index z satisfies $0 < z < (m_j - m')\kappa n$.

Here, the fixed number of bits C is the number of input bits to the encoder in case of applying $2^{m'}$-PSK, which is $C = \lfloor \log_2 P_{2^{k+1}}(n,m') \rfloor$. Also, the number of output bits is D + z when the number of output bits in case of applying $2^{m'}$-PSK is $D = \kappa m'n$.

The encoder of this embodiment is constituted by a $2^{m'}$-PSK subset phase generator 1, 2n sets of subset mappers 2, a subset interleaver 3, and an additional bit switcher 4 for controlling the number of bits to be allocated based on the modulation index applied to each carrier.

Assuming the total number of bits added to each subset is $Z_i$ ($1 \leqq i \leqq 2n$), $Z = \sum_{i=1}^{2n} z_i$ and $0 < z_i \leqq (m_j - m')\kappa / 2$. By adding signal point identification information within the group which is different on a subset-by-subset basis, modulation signal points are determined (signal point mapping ).

The total number of interleaves C (n, m') in this embodiment is identical to the case of the first embodiment, of which configuration is shown in FIG. 1 (formula (10)). Accordingly, the total number of interleaving bits becomes $\lfloor \log_2 C(n,m') \rfloor = x$ bits.

In this embodiment, first, z bits among (C + z) bits are added to the group mapping signal after interleaving is performed by $Z_i$ bits/subset on a subset-by-subset basis for the entire carriers. This produces $m'\kappa/2 + Z_i$ [bits/subset], and the signal point mapping of the modulation index corresponding thereto is performed on a carrier-by-carrier basis in the modulation index.

Thereafter x bits are input to subset interleaver 3 as a subset interleaving control signal, and the remainder bits are input to $2^{m'}$-PSK subset phase generator 1 to select a group enabling peak power suppression.

The group mapping control signal being output from $2^{m'}$-PSK subset phase generator 1 is generated so that virtual representative points of $2^{m'}$-PSK satisfy, for example, formula (1). In this combination here, the identical combination is selected continuously, instead of depending on the input C - x bits.

Also, this combination may be determined arbitrarily. However, the subset phase generation for the basic configuration depends on an interleaving control signal value consisting of x bits being input to subset interleaver 3. In other words, the control signal value also represents by what pair category the basic 2n subset series are constituted.

Thus, in $2^{m'}$-PSK subset phase generator 1, a group mapping control signal consisting of m'κ/2 x 2n bits, or κm'n bits, having one to one correspondence with C-x bits is generated.

In subset mappers 3, a subset, or κ /2 virtual representative points, is output according to the input group mapping control signal consisting of m' κ /2 bits (group mapping).

In subset interleaver 2, the present invention utilizes that no positional relation is fixed on the frequency axis between continuous subset pairs which satisfy, for example, the aforementioned formula (1). Namely, this signifies that not only a group mapping signal but also a signal point mapping signal of continuous κ /2 carriers being output from 2n subset mappers 2 may be allocated on arbitrary positions on the frequency axis.

Therefore, the group mapping signal is interleaved on an m' κ/2 bit basis by an input x-bit interleaving control signal in regard to n-pairs of kernels generated by subset phase generator 1 (here, the kernels are specified on a group level basis, and signal points have not been fixed yet).

In additional bit switcher 4, the number of signal point identification information bits in the group is changed on a carrier-by-carrier basis by means of a control signal (Adp) for selecting modulation system against each carrier.

The Adp signal requires Bκn bits because $B = \lceil log_2 j \rceil$ bits for selecting j kinds of modulation indexes are respectively required for N = κn carriers. By adding a required number of additional bits $z_i$ for each subset to the group mapping signal using the Adp signal, an amplitude/phase modulation signal having a value of $2^{mi}$ ($1 \leqq i \leqq j$) is output carrier by carrier (signal point mapping).

Thus, a signal point mapping signal having mi ($m' \leqq mi \leqq mj$) bits per carrier, $z_i$ ($1 \leqq i \leqq 2n$) bit per subset, that is, m'κn + z = D + z bits as a whole, is output.

Additionally, in the coding algorithm explained in the aforementioned first to fifth embodiments, the numerator of the ideal coding rate $log_2 P_\kappa$ ($P_\kappa$ : total number of patterns satisfying the coding algorithm) at the code length of $\kappa = 2^{k+1}$ is not always an integer.

Such a case of producing non-integer indicates that it is not possible in the binary-based digital signal processing to represent without introducing redundancy. An encoder/decoder to realize this becomes greatly complicated in the configuration, and therefore the hardware amount becomes increased.

To cope with this problem, by using a value omitting below the decimal point, $\lfloor log_2 P_k \rfloor$, an arbitrary information bit is assigned to a code bit. Further, in case of grouping is performed in $2^{m'}$-PSK, in the amplitude/phase modulation system having 2m (> m') states, the difference (m - m') becomes the signal point identification information within the group in each carrier.

Therefore, when defining the number of input bits and output bits to/from the encoder in $2^{m'}$-PSK as C and D, Respectively; and when defining the input bits of the output bits of the additional information obtained by applying $2^m$-state amplitude/phase modulation system as z and w, respectively, the coding rate (R κ (n,m)) having the code length: κ becomes;

$$R\kappa(n,m) = \frac{\lfloor log_2 P\kappa \rfloor}{\kappa mn} = \frac{C+z}{D+w} \quad (18)$$

This can be realized by restricting the total number of combinations to $2^{c+z}$ when determining n kernels which satisfies formula (1) at, for example, k = 1 to generate a transmission signal point series of N = κn carriers.

The coding algorithm according to this embodiment is formed by the following two steps:

1) First, it is assumed that $2^m$ signal points in each carrier are divided into $2^{m'}$ groups, of which virtual representative point series

$$\vec{G}(i)\left(1 \le i \le 2^{m'};\in \vec{G}\right).$$

Then, code data c(i) generated by the information data i ($0 \leqq i \leqq 2^{c+z}-1$) is mapped into a virtual representative point series $\vec{g}(c(i))$, as a transmission signal series in the $2^m$-state amplitude/phase modulation system (group mapping).

$$\vec{g}(c(i)) = \{\vec{g}_1(c(i)),\vec{g}_2(c(i)),...,\vec{g}_{\kappa n}(c(i))\}$$

Here, $\vec{g}(c(i))(1 \le j \le \kappa n; \in \vec{G})$
denotes a virtual representative point of the j-th carrier The virtual representative point series is determined so that virtual representative point in each carrier satisfies the aforementioned phase difference condition. The C bit is used for this operation.

2) Next, a signal point $\vec{s}_j(c(i))(1 \le j \le \kappa n)$ belonging to the group represented by the virtual representative point in each carrier is determined. In other words, among $2^{m-m'}$ signal points in the group satisfying the phase difference condition, one point is selected.

The z bit is used for this operation. For example, if the signal point identification information within the group related to the carrier of interest is a through bit of the information bits, this denotes (m - m' ) bit/carrier, whereas if the signal point identification information is a copy of the other carrier, this denotes 0 bit/carrier. Therefore, the code data c (i) is mapped into n kernel-series represented by one symbol interval of κn carriers, or κ n transmission signal point series $\vec{s}(c(i))$ represented thereby (signal point mapping), where,

$$\vec{s}(c(i)) = \{\vec{s}_1(c(i)),\vec{s}_2(c(i)),...,\vec{s}_{\kappa n}(c(i))\} \in \vec{S}$$

Here, when defining $2^m$ signal points as $\vec{q}_i\,(1 \le i \le 2^m\,; \in \vec{Q})$, then $\vec{S} \subseteq \vec{Q}$ . Also, the identical coding is given to the codes excluding the codes of this embodiment.
Now, there will be discussed hereinafter on the decoding of the modulation signal having the encoded information generated by the coding algorithm described in the aforementioned first to fifth embodiments.
For a signal having information of the code length of C + z bits, or a signal in one symbol interval generated by the coding algorithm of the aforementioned first to fifth embodiments, a most-likelihood-decoding is performed from the reception signal (r) in κn carrier having the bit width D + ω.
Here,

$$\vec{r} = \{\vec{r}_1,\vec{r}_2,....\vec{r}_{Kn}\} \qquad (19)$$

also, ω is defined as the additional bit for the $2^m$-state amplitude/phase modulation system in the aforementioned first to fifth embodiments (for example, ω = z in case of the first, fourth or fifth embodiments). Then, a likelihood function in code c(i) is given by the following two steps:

1) First, most likelihood value in the virtual representative point

$$\vec{G}(i)\left(1 \le i \le 2^{m'}\right)$$

of $2^{m'}$-PSK is derived. When defining a most likelihood function of the virtual representative point series $\vec{g}(c(i))$ constituting the code c(i) and the reception signal series $\vec{r}$ as;

$$\lambda_g\left(c(i)\right) = \sum_{j=1}^{\kappa n}\left\{\vec{g}_j\left(c(i)\right) - \vec{r}\right\} \qquad (20)$$

then,

$$choose \qquad \vec{g}\left(\hat{c}(i)\right) \qquad if \quad \lambda_g\left(\hat{c}(i)\right) = \min_{c(i)}\left\{\lambda_g\left(c(i)\right)\right\} \qquad (21)$$

is determined as the transmitted virtual representative point series (group mapping). Thereby C bits among the information bits (C + z) are decoded.
2) Next, on a carrier-by-carrier basis, among the signal points $\vec{s}_j(c(i))$ belonging to the group represented by the virtual representative point $\vec{g}_j(c(i))$, the nearest of the received signal is determined as a transmitted signal point ( signal point demapping). Namely, in the j-th carrier ($1 \leqq j \leqq \kappa n$);

$$\vec{s}_j\left(\hat{c}(i)\right) = \min_{\vec{g}_j(\hat{c}(i))}\left\{\vec{s}_j\left(\hat{c}(i)\right) - \vec{r}_j\right\} \qquad (22)$$

is determined. Thus z bits among the information bits (C + z) are decoded.

The data having (C + z) bits decoded by the above two steps are determined as decoded data.
The effects of the present invention is discussed below:
First, a peak power suppression obtained by the coding algorithm according to the present invention is summarized in FIG. 18. According to this figure, for example, in case that the modulation system is 16-QAM, the code length is 8, and the number of kernels is 1, then the peak power suppression become 3.52, 5.37 and 4.67 [dB], respectively, corresponding to the first, second and third embodiments.
FIG. 19 shows a comparison diagram illustrating the relation between the number of carriers and the coding rate performance in the cases of 64-QAM and 16-QAM (here, k = 1 at the code length $\kappa = 2^{k+1}$). It is understood that the coding rate performance having near to 1 is obtained at more than a certain number of carriers.
FIG. 20 shows a comparison diagram similar to FIG. 19, illustrating the relation between the number of carriers and the coding rate performance (here, k = 2 at the code length $\kappa = 2^{k+1}$).

INDUSTIAL APPLICABILITY

As the embodiments of the present invention having been described according to the accompanied charts and drawings, in a system which commonly amplifies a plurality of carriers N (= κn: κ is code length), the present invention enables to provide a coding method having error correction capability by expanding the least free distance of the codes while suppressing a peak power (or peak-to-average power ratio), having preferred applicability to any modulation systems.
The foregoing description of the embodiments is not intended to limit the invention to the particular details of the examples illustrated. Any suitable modification and equivalents may be resorted to the scope of the invention. All features and advantages of the invention which fall within the scope of the invention are covered by the appended claims.

**Claims**

1. A coding method for performing $2^m$-state amplitude/phase modulation by means of a plurality of carriers N (= κn: κ is code length) comprising the steps of:

   dividing the phase space into $2^{m'}$ groups (m > m');

regarding each representative point in said $2^{m'}$ groups as $2^{m'}$-PSK signal point;
selecting a pair of which summation of phase difference $\Delta\phi$ ($0 \leqq \phi < 2\pi$) between said regarded $2^{m'}$-PSK signal points becomes $\pi$; and
selecting each signal point within said $2^{m'}$ groups by (m - m') bits.

**2.** The coding method according to claim 1 wherein said each representative point in said $2^{m'}$ groups has a maximum amplitude level.

**3.** The coding method according to claim 1 wherein said m' is set as m' = 2 representing quadrant information.

**4.** The coding method according to claim 1 further comprising the steps of:

in case said code length $\kappa = 2^{k+1}$ ($k \geqq 2$), setting a basic subset of $2^k$-carriers having $\kappa = 2^k$, and an extended subset of $2^k$-carriers; and
selecting a signal point so that no phase error is produced in said basic subset against said extended subset, to perform QAM (quadrature amplitude modulation).

**5.** The coding method according to claim 4 wherein said method comprises a step of copying an information bit identical to said basic subset to said extended subset so that no phase error is produced in said basic subset against said extended subset.

**6.** The coding method according to claim 4 wherein, non-coding is performed in said extended subset against at least one carrier or more.

**7.** The coding method according to either of claim 1 to claim 7 wherein different modulation system is applied for each of said N carriers ($N = \kappa n$: $\kappa$ is code length).

**8.** An encoder for $2^m$-state amplitude/phase modulation by means of a plurality of carriers N ($= \kappa n$: $\kappa$ is code length) comprising:

an input terminal for inputting information data having the number of input bits C in case of applying $2^{m'}$-PSK and the number of additional bits z;
a $2^{m'}$-PSK subset phase generator for inputting (C - x) bits excluding an interleave control signal consisting of x bits for controlling subset interleaving, to generate 2n group-mapping control signals;
2n subset-mappers to which a group mapping control signal being obtained from said $2^{m'}$-PSK subset phase generator is respectively input; and
a subset interleaver for inputting outputs of said 2n subset-mappers to interleave said subset by said x-bit interleave control signal so that total phase difference $\Delta\phi$ ($0 \leqq \Delta\theta < 2\pi$) between $2^{m'}$-PSK signal points becomes equal to $\pi$,

said encoder being constituted so that said additional bits z are added to the output of said subset interleaver.

**9.** An encoder for $2^m$-state amplitude/phase modulation by means of a plurality of carriers N ($= \kappa n$: $\kappa$ is code length) comprising:

an input terminal for inputting information data having the number of input bits C in case of applying $2^{m'}$-PSK and the number of additional bits z;
a $2^{m'}$-PSK subset phase generator for inputting (C - x) bits excluding an interleave control signal consisting of x bits for controlling subset interleaving, to generate 2n group-mapping control signals;
2n subset-mappers to which a group mapping control signal being obtained from said $2^{m'}$-PSK subset phase generator is respectively input; and
a subset interleaver for inputting to said 2n subset-mapper outputs a signal to which said additional bits z are added, to interleave said subset by said x-bit interleave control signal so that total phase difference $\Delta\phi$ ($0 \leqq \Delta\phi \leqq 2\pi$) between $2^{m'}$-PSK signal points becomes equal to $\pi$.

**10.** The encoder according to claim 9 further comprising:

n sets of additional bit controllers being connected to outputs of said 2n subset-mappers for adding signal point identification information within the group on a code length basis,

whereby said additional bit controllers apply said additional bits z to at least one carrier or more among extended subsets.

**11.** An encoder for mixing $2^m$-state amplitude/phase modulation system with $2^{m'}$-PSK by a plurality of carriers N (= κn: κ is code length), comprising:

an input terminal for inputting information data having the number of input bits C in case of applying $2^{m'}$-PSK and the number of additional bits z;
a $2^{m'}$-PSK subset phase generator for inputting (C - x) bits excluding an interleave control signal consisting of x bits for controlling subset interleaving, to generate 2n group-mapping control signals;
2n subset-mappers to which a group mapping control signal being obtained from said $2^{m'}$-PSK subset phase generator is respectively input; and
a subset interleaver for inputting outputs of said 2n subset-mappers to interleave said subset by said x-bit interleave control signal so that total phase difference $\Delta\phi$ ($0 \leqq \Delta\phi < 2\pi$) between $2^{m'}$-PSK signal points becomes equal to $\pi$,

said encoder being constituted so that said additional bits z are added to the output of said subset interleaver against amplitude/phase modulation.

**12.** An encoder for use in modulation by a plurality of carriers N (= κn: κ is code length) the modulation system of which varies on a time-variant basis, comprising:

an input terminal for inputting information data having the number of input bits C in case of applying $2^{m'}$-PSK and the number of additional bits z;
a $2^{m'}$-PSK subset phase generator for inputting (C - x) bits excluding an interleave control signal consisting of x bits for controlling subset interleaving, to generate 2n group-mapping control signals;
2n subset-mappers to which a group mapping control signal being obtained from said $2^{m'}$-PSK subset phase generator is respectively input;
a subset interleaver for inputting outputs of said 2n subset-mappers to interleave said subset by said x-bit interleave control signal so that total phase difference $\Delta\phi$ ($0 \leqq \Delta\phi < 2\pi$) between $2^{m'}$-PSK signal points becomes equal to $\pi$; and
an additional-bit switcher for defining said number of additional bits Z as a difference (m - m') bits of the modulation index being allocated on a carrier-by-carrier basis, to switch to add said additional bits z to an output of said subset interleaver corresponding to the modulation system.

**13.** A decoding method corresponding to the coding method according to either of claim 1 to claim 7 comprising the steps of:

performing a $2^{m'}$-PSK group mapping against said coded data; and
selecting a signal having the least signal point distance between the signals in the group being selected on a carrier-by-carrier basis and in a received signal point, to perform most likelihood estimation.

FIG. 1

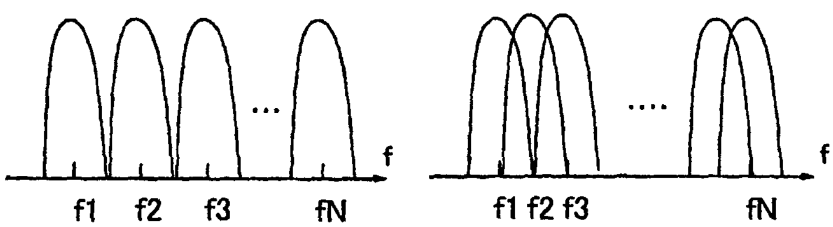


(A) Multicarrier modulation (B) OFDM

FIG. 2

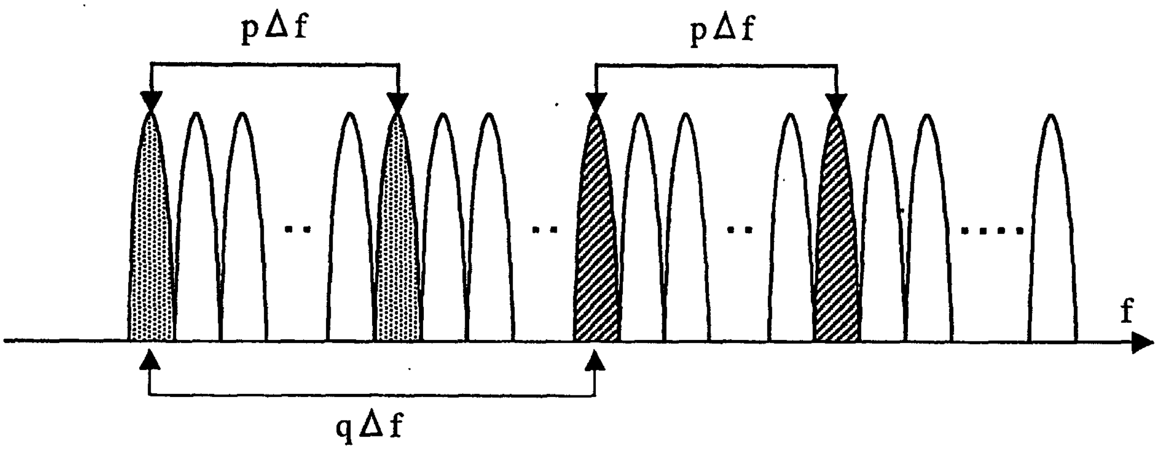

FIG. 3

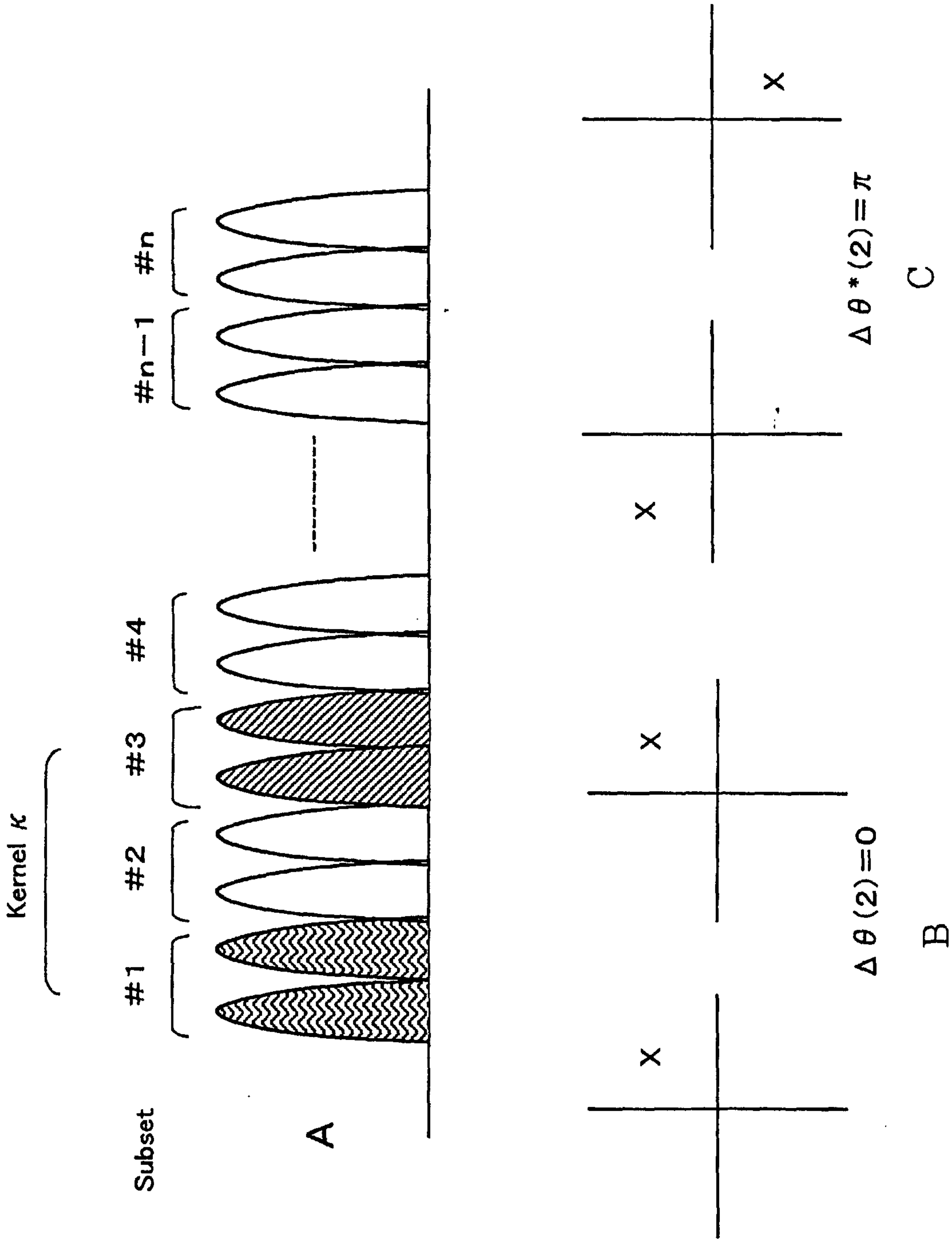

FIG. 4

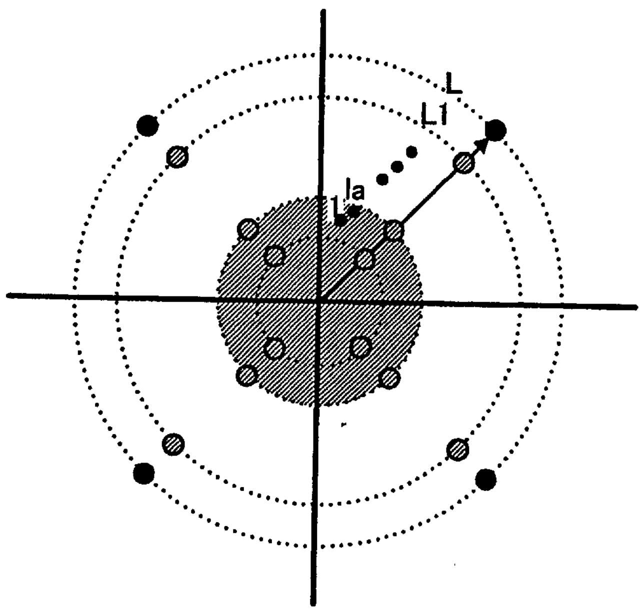

FIG. 5

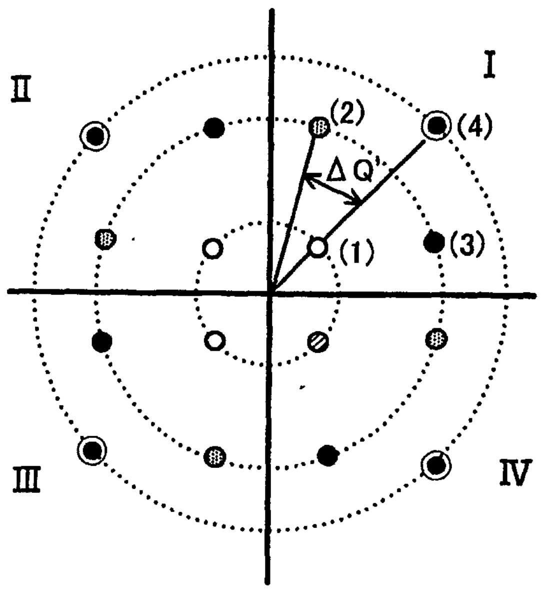


◉ : Virtual representative points VRP

FIG. 6

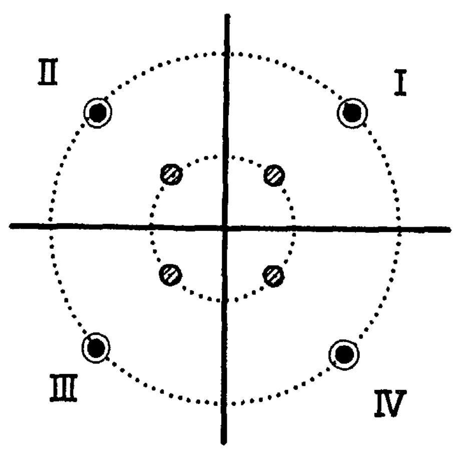


◉ : Virtual representative points VRP

FIG. 7

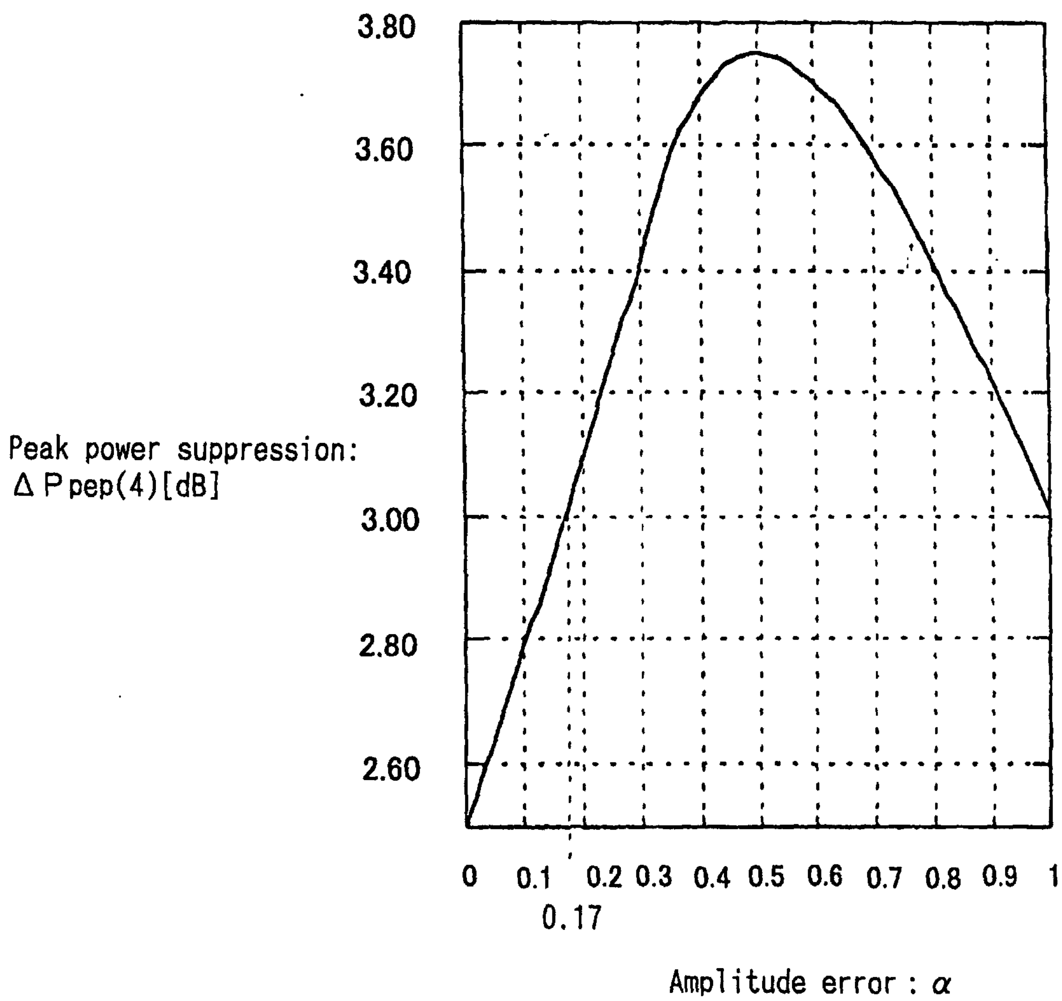
3.80
3.60
3.40
3.20
3.00
2.80
2.60
Peak power suppression:
Δ P pep(4)[dB]
0
0.1
0.2
0.3
0.4
0.5
0.6
0.7
0.8
0.9
1
0.17
Amplitude error : α

FIG. 8

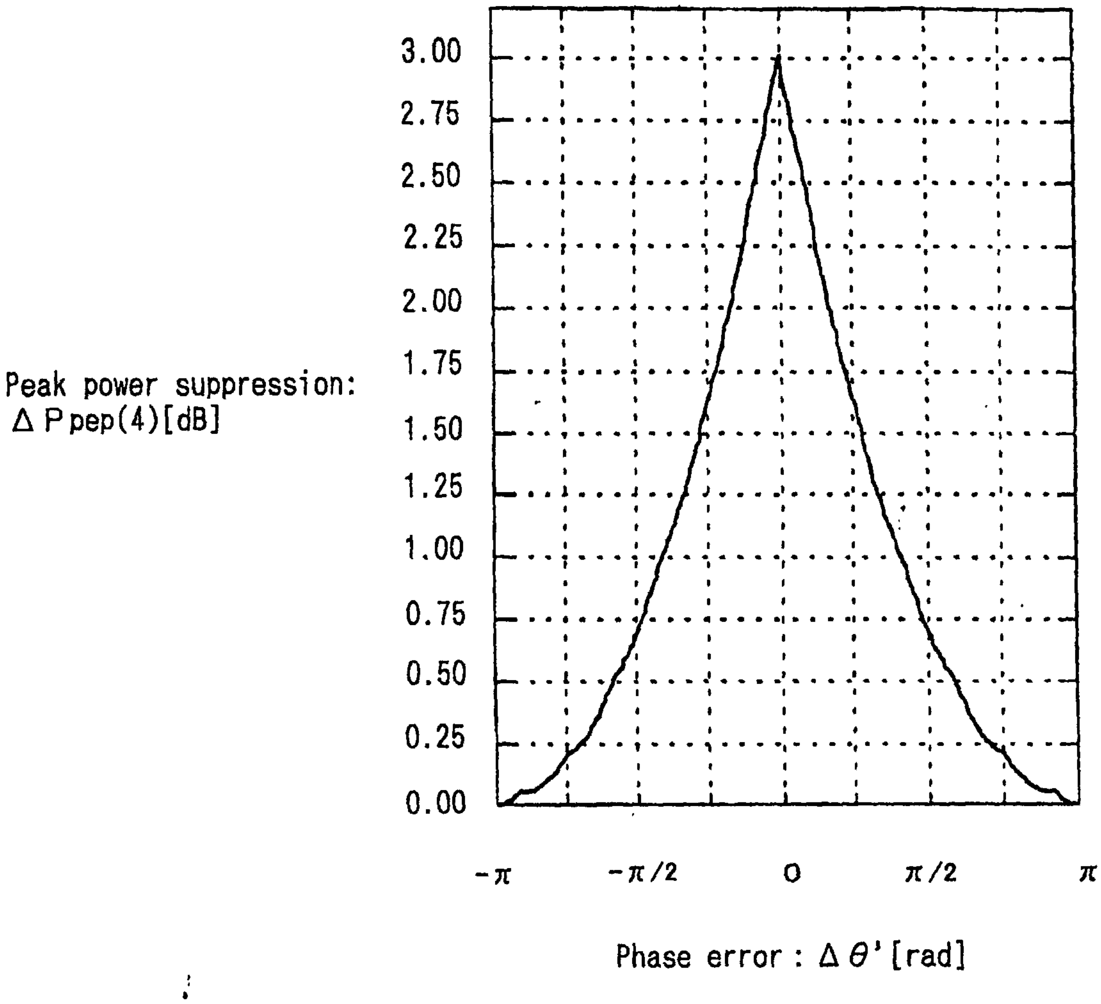

Peak power suppression:
Δ P pep(4)[dB]
3.00
2.75
2.50
2.25
2.00
1.75
1.50
1.25
1.00
0.75
0.50
0.25
0.00
-π
-π/2
0
π/2
π
Phase error : Δ θ' [rad]

FIG. 9

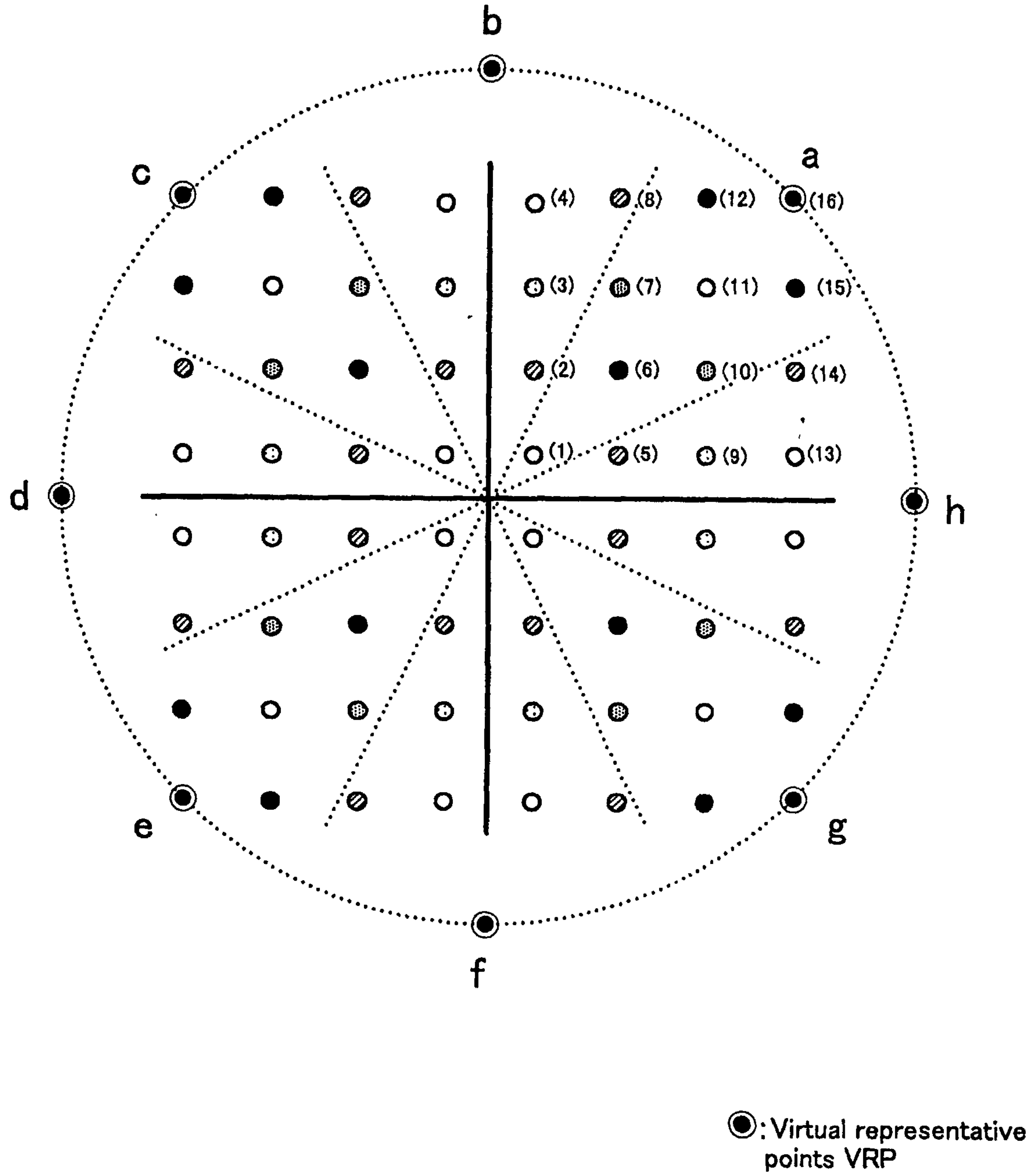
b
a
c
(4)
(8)
(12)
(16)
(3)
(7)
(11)
(15)
(2)
(6)
(10)
(14)
(1)
(5)
(9)
(13)
d
h
e
g
f
: Virtual representative points VRP

FIG. 10

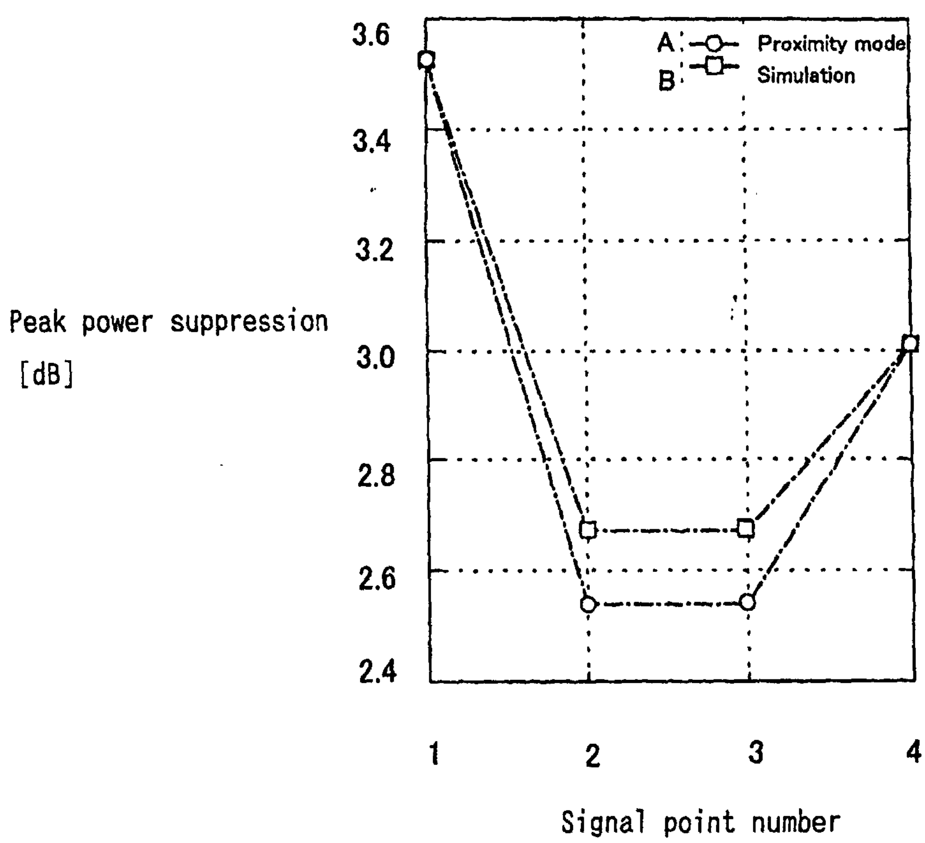
3.6
3.4
3.2
3.0
2.8
2.6
2.4
Peak power suppression
[dB]
A : Proximity model
B : Simulation
1
2
3
4
Signal point number

FIG. 11

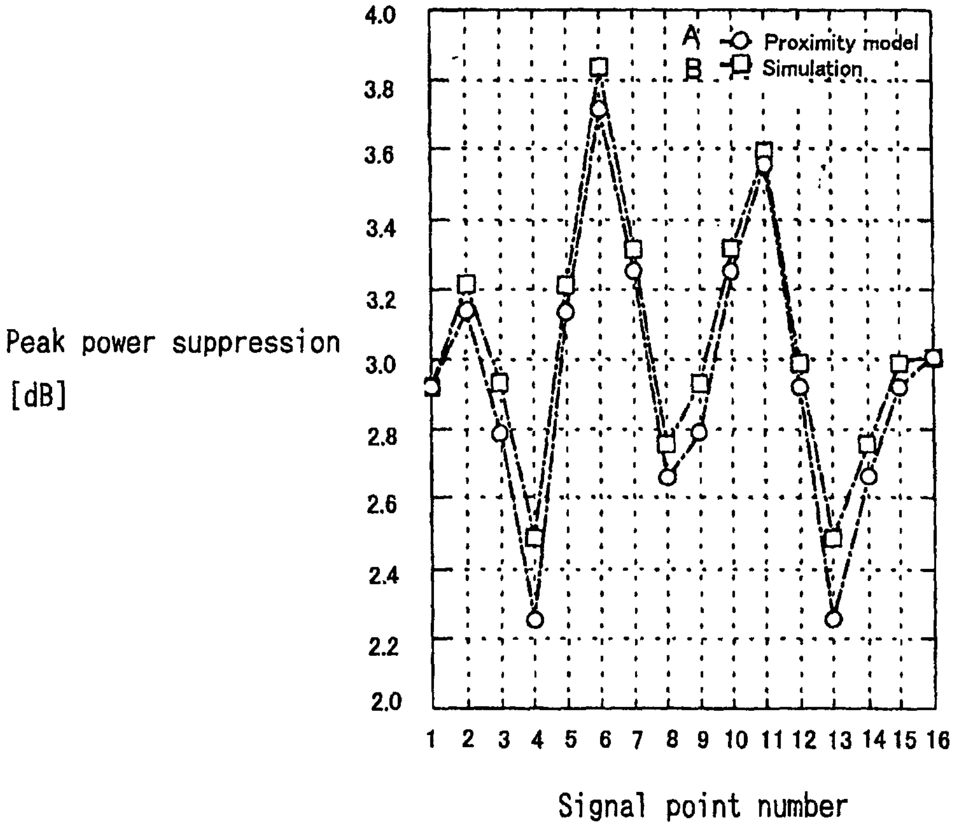
A Proximity model
B Simulation
Peak power suppression [dB]
4.0
3.8
3.6
3.4
3.2
3.0
2.8
2.6
2.4
2.2
2.0
1 2 3 4 5 6 7 8 9 10 11 12 13 14 15 16
Signal point number

FIG. 12

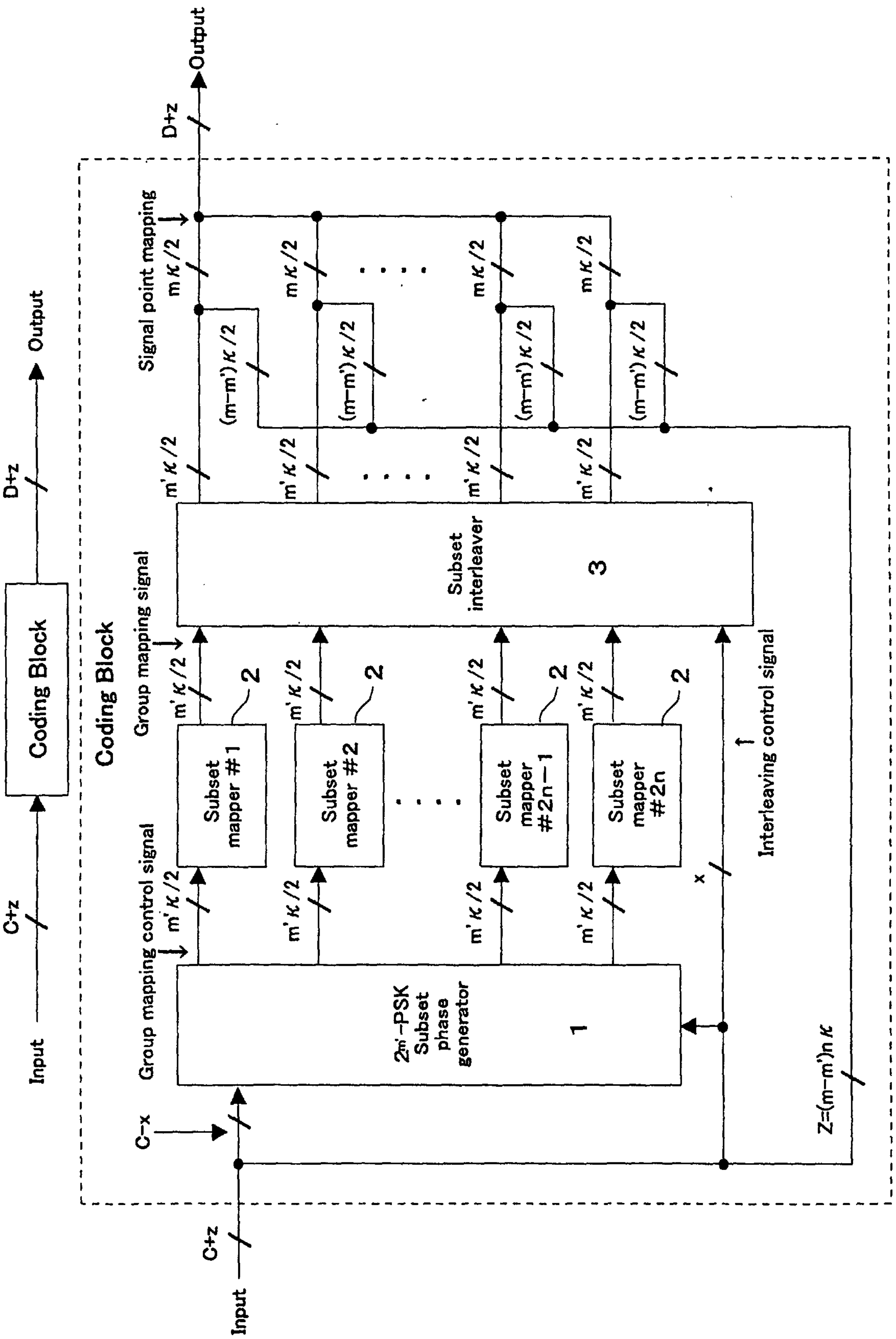
Input
C+z
Coding Block
D+z
Output
Coding Block
Input
C+z
C−x
Group mapping control signal
m'κ/2
$2^{m'}$−PSK Subset phase generator
1
Subset mapper #1
Subset mapper #2
Subset mapper #2n−1
Subset mapper #2n
2
x
Interleaving control signal
Group mapping signal
Subset interleaver
3
(m−m')κ/2
mκ/2
Signal point mapping
Z=(m−m')nκ
D+z
Output

FIG. 13

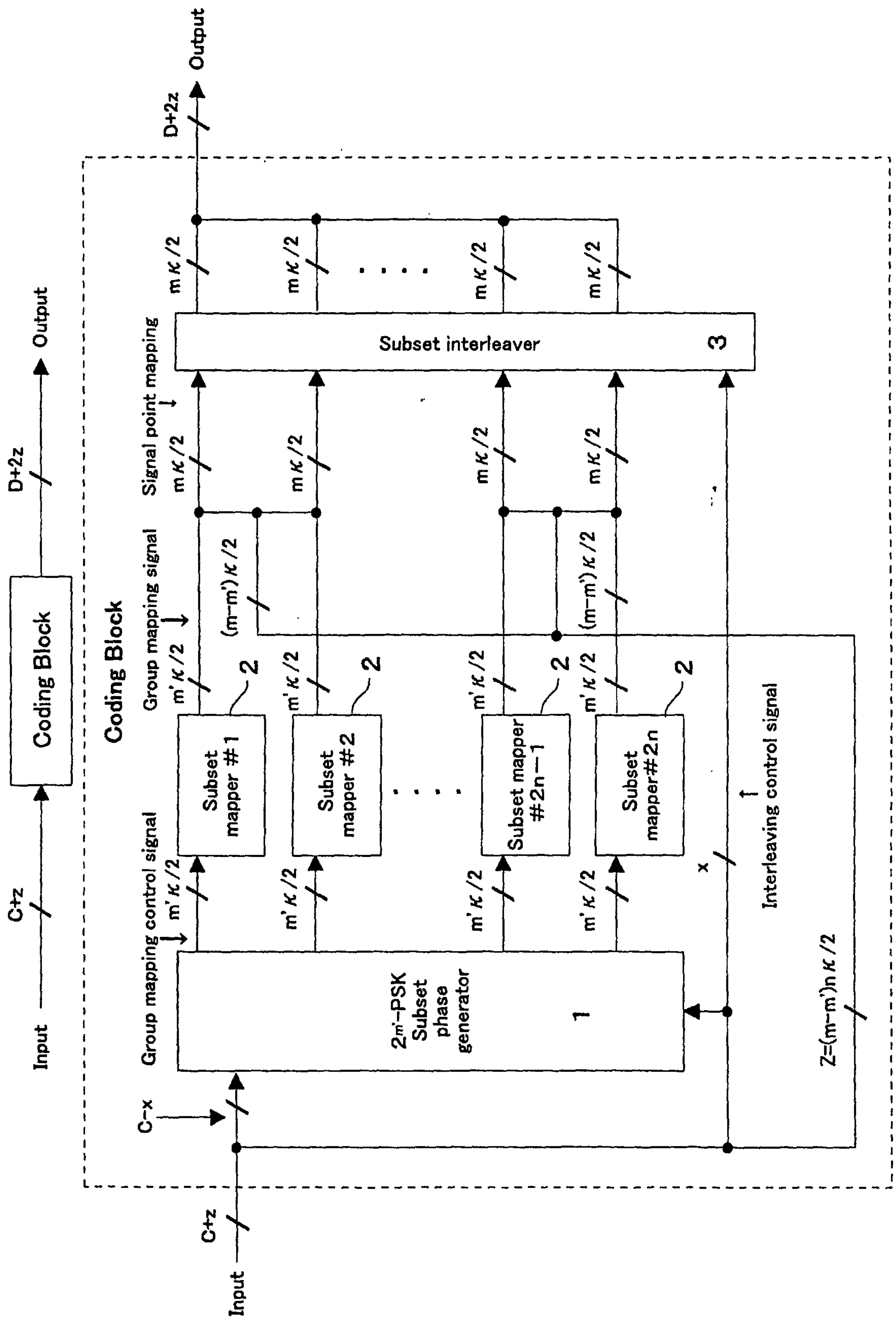
Input
C+z
Coding Block
D+2z
Output
Coding Block
Input
C+z
C−x
Group mapping control signal
m'κ/2
2$^{m'}$-PSK Subset phase generator
1
Subset mapper #1
Subset mapper #2
Subset mapper #2n−1
Subset mapper#2n
2
x
Interleaving control signal
Z=(m−m')nκ/2
Group mapping signal
(m−m')κ/2
Signal point mapping
mκ/2
Subset interleaver
3
D+2z
Output

FIG. 14

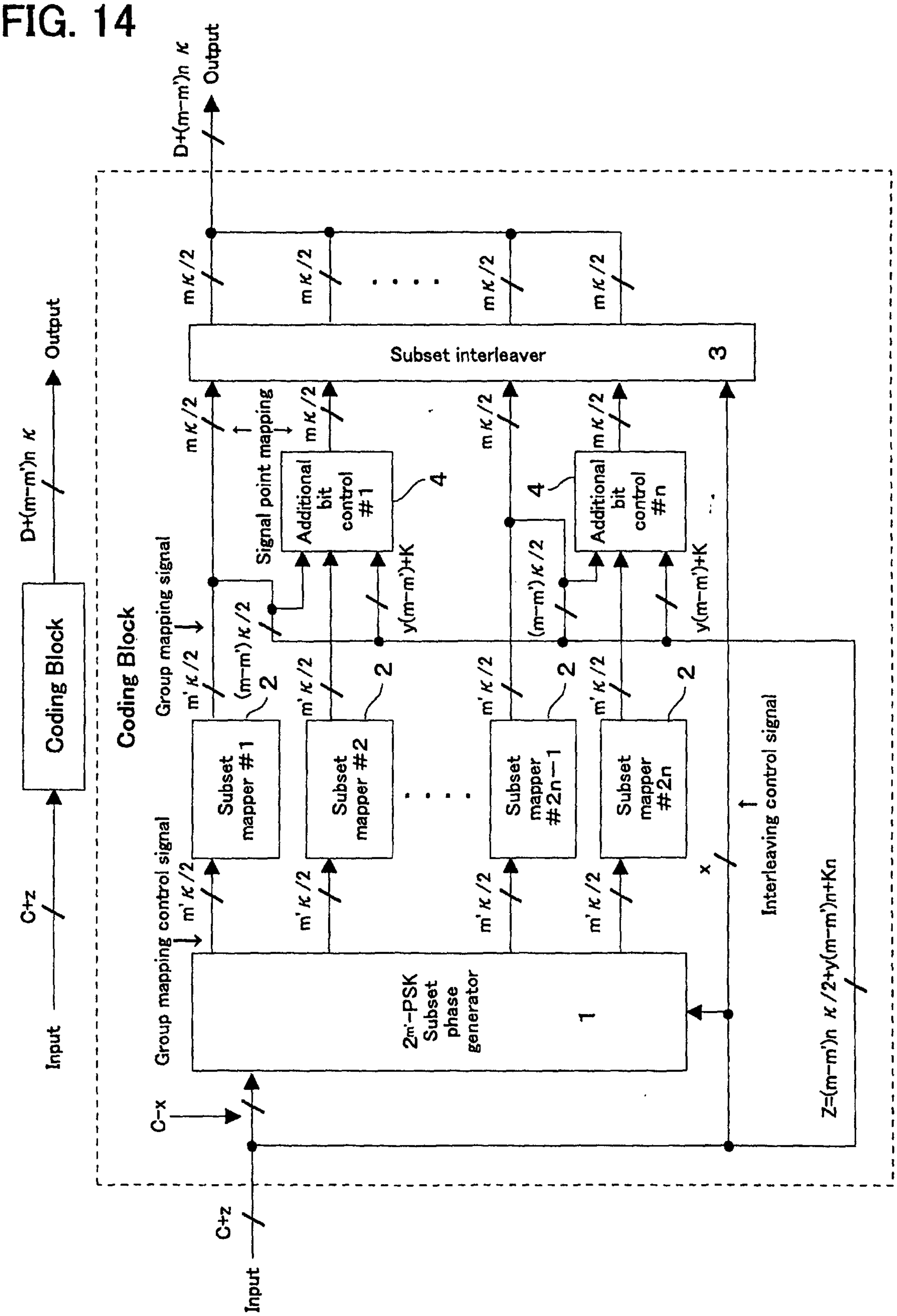
Input
C+z
Coding Block
D+(m−m')n κ
Output
Coding Block
Input
C+z
C−x
Group mapping control signal
$2^{m'}$−PSK Subset phase generator
1
m' κ /2
Subset mapper #1
Subset mapper #2
Subset mapper #2n−1
Subset mapper #2n
2
Group mapping signal
(m−m') κ /2
y(m−m')+K
Additional bit control #1
Additional bit control #n
4
Signal point mapping
m κ /2
Subset interleaver
3
x
Interleaving control signal
Z=(m−m')n κ /2+y(m−m')n+Kn
D+(m−m')n κ
Output

FIG. 15

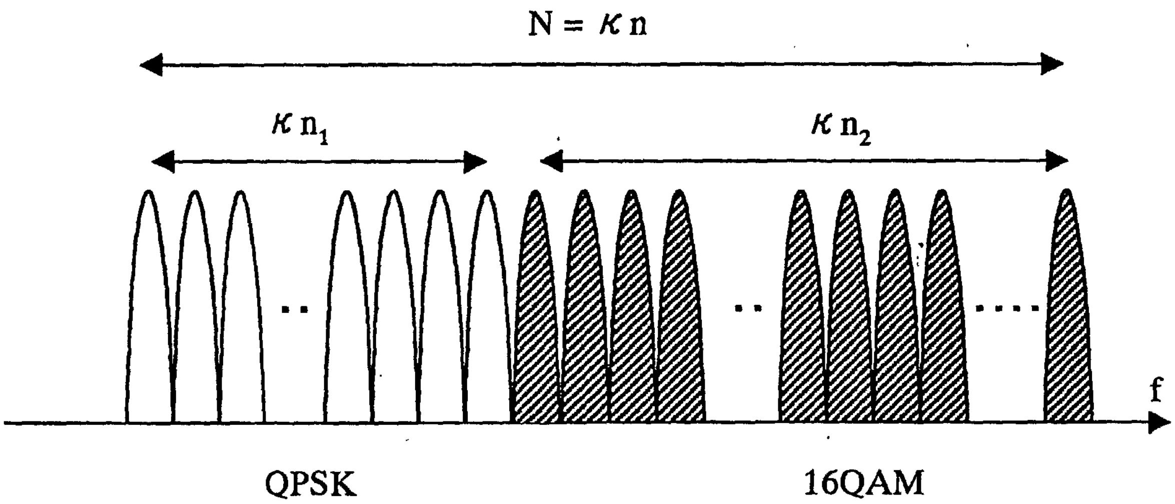

FIG. 16

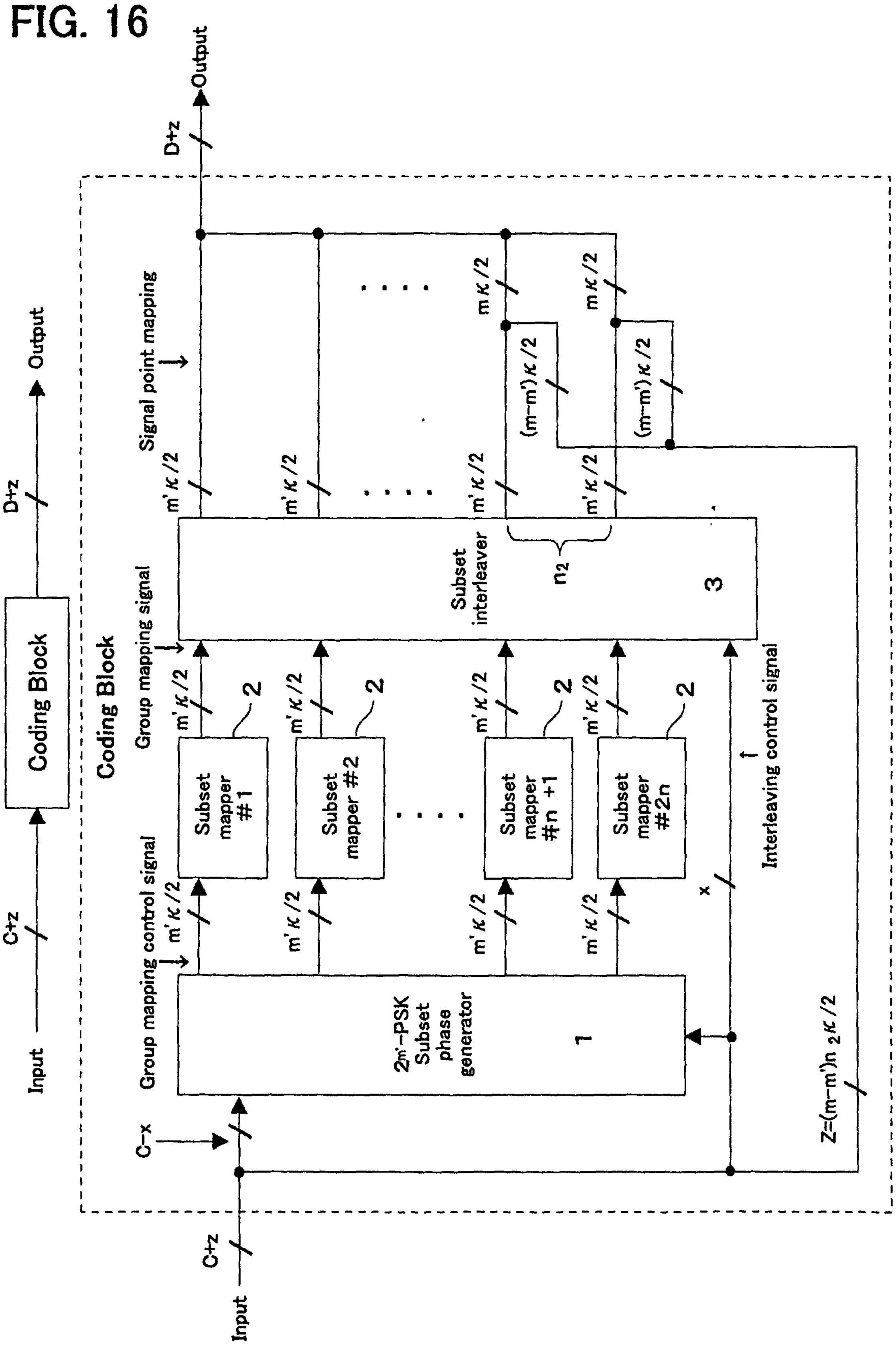
Input
C+z
Coding Block
D+z
Output
Coding Block
Group mapping control signal
Group mapping signal
Signal point mapping
$2^{m'}$-PSK Subset phase generator
1
Subset mapper #1
Subset mapper #2
Subset mapper #n +1
Subset mapper #2n
2
Subset interleaver
3
$n_2$
Interleaving control signal
C-x
x
$m'\kappa/2$
$m\kappa/2$
$(m-m')\kappa/2$
$Z=(m-m')n_2\kappa/2$
D+z
Output

FIG. 17

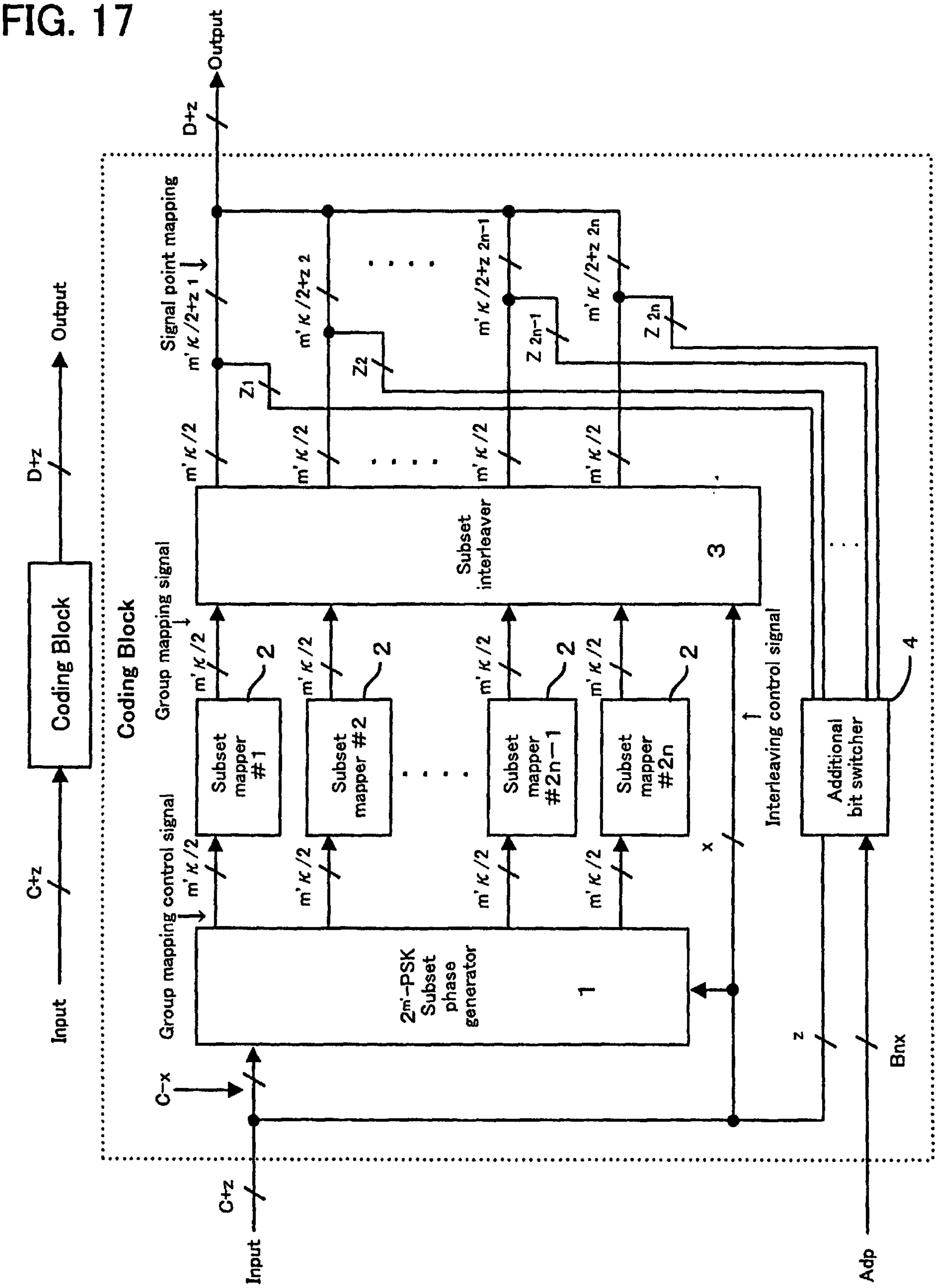

Input
C+z
Coding Block
D+z
Output
Coding Block
C-x
Group mapping control signal
m'κ/2
$2^{m'}$-PSK Subset phase generator
1
Subset mapper #1
Subset mapper #2
Subset mapper #2n−1
Subset mapper #2n
2
Group mapping signal
Subset interleaver
3
Interleaving control signal
x
z
Bnx
Adp
Additional bit switcher
4
Z1
Z2
Z 2n-1
Z 2n
m'κ/2+z 1
m'κ/2+z 2
m'κ/2+z 2n-1
m'κ/2+z 2n
Signal point mapping

FIG. 18

| Modulation system | Code length | Number of kernels | Peak power suppression [dB] | $d^2_{min}$ | remarks |
|---|---|---|---|---|---|
| 16QAM | 4 | 1 | 2. 55 | 1 | |
| | | 2 | 2. 55 | 1 | |
| | 8 | 1 | 3. 52 | 2 | First embodiment |
| | | | 5. 37 | 2 | Second embodiment |
| | | | 4. 67 | 2 | Third embodiment |
| 64QAM | 4 | 4 | 2. 28 | 1 | |
| | 8 | 8 | 5. 14 | 2 | Second embodiment |

FIG. 19

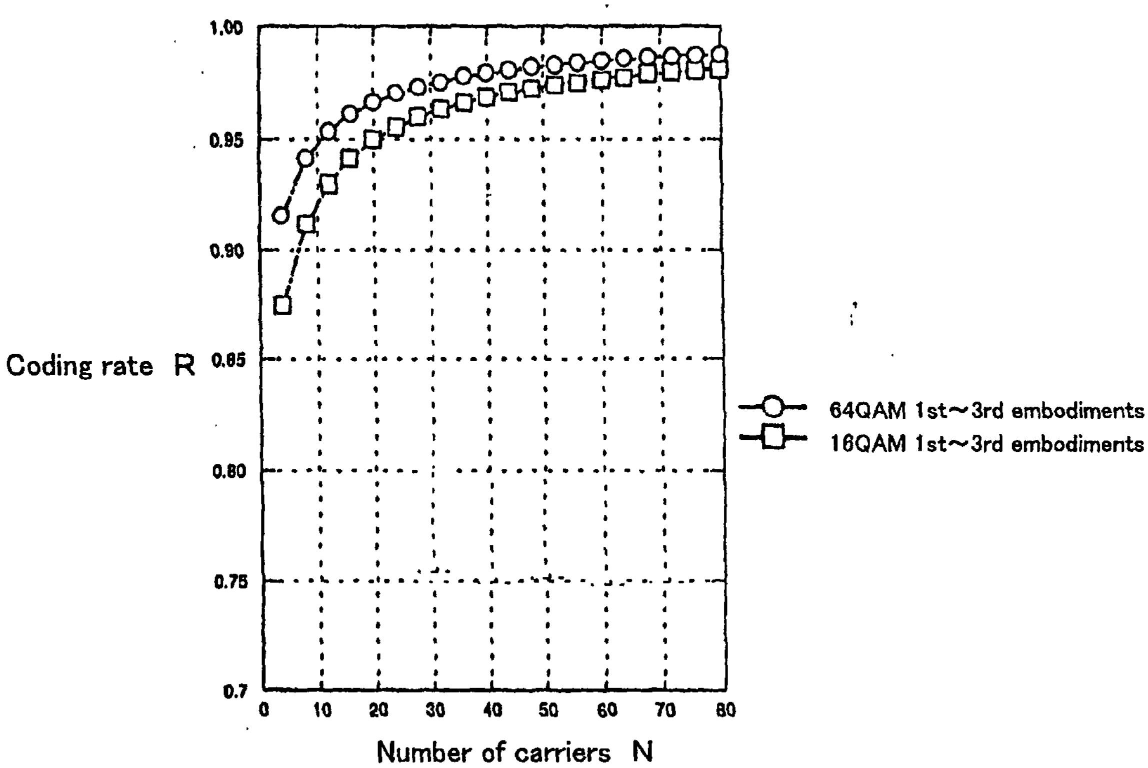
1.00
0.95
0.90
Coding rate R
0.85
0.80
0.75
0.7
0
10
20
30
40
50
60
70
80
Number of carriers N
64QAM 1st~3rd embodiments
16QAM 1st~3rd embodiments

FIG. 20

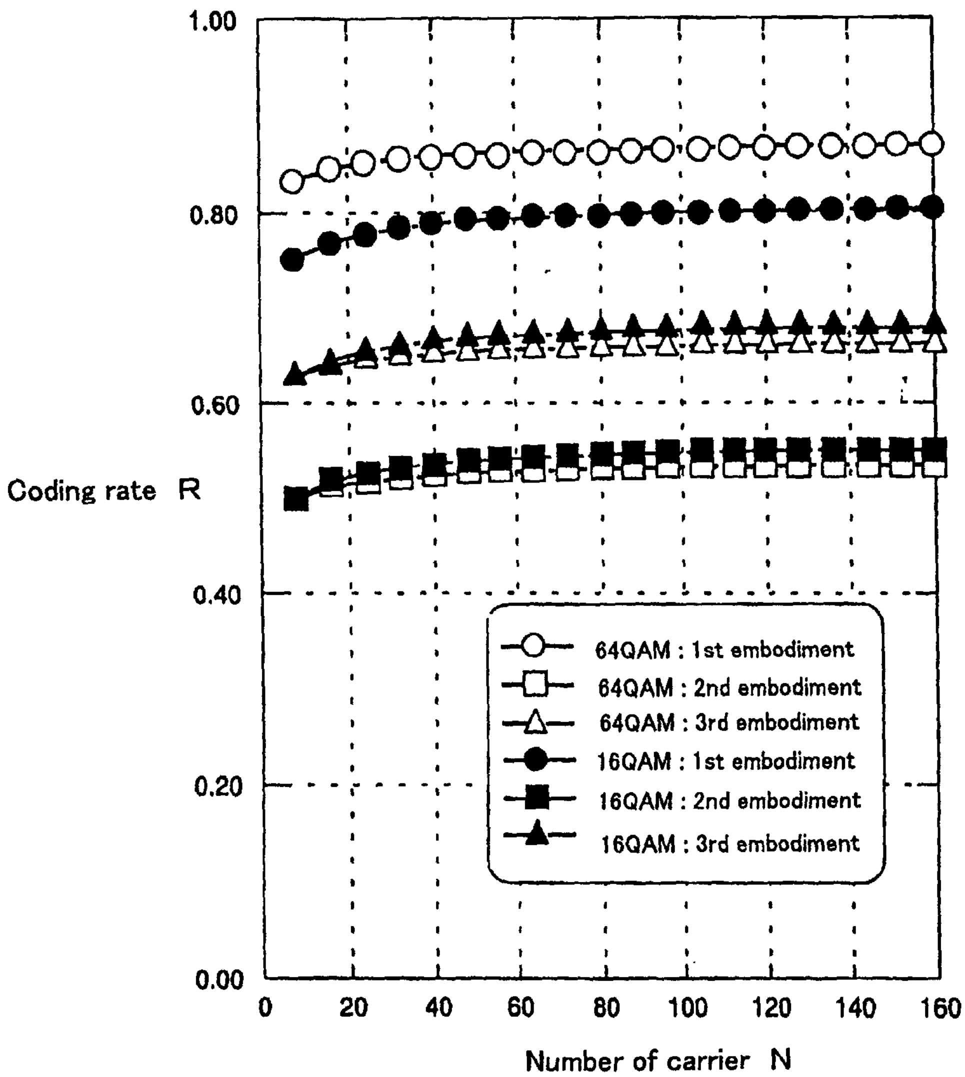
1.00
0.80
0.60
0.40
0.20
0.00
Coding rate R
0
20
40
60
80
100
120
140
160
Number of carrier N
64QAM : 1st embodiment
64QAM : 2nd embodiment
64QAM : 3rd embodiment
16QAM : 1st embodiment
16QAM : 2nd embodiment
16QAM : 3rd embodiment

**INTERNATIONAL SEARCH REPORT**

International application No.
PCT/JP00/01178

A. CLASSIFICATION OF SUBJECT MATTER
Int.Cl$^7$ H04J11/00
Int.Cl$^7$ H04J1/00

According to International Patent Classification (IPC) or to both national classification and IPC

B. FIELDS SEARCHED

Minimum documentation searched (classification system followed by classification symbols)
Int.Cl$^7$ H04J11/00
Int.Cl$^7$ H04J1/00

Documentation searched other than minimum documentation to the extent that such documents are included in the fields searched
Jitsuyo Shinan Koho 1926-2000
Kokai Jitsuyo Shinan Koho 1971-2000

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | EP, 828365, A2 (LUCENT TECHNOLOGIES INC.), 11 March, 1998 (11.03.98), page 3, line 22 to page 4, line 29 & JP, 10-107762, A (LUCENT TECHNOLOGIES INC.), 24 April, 1998 (24.04.98), page 5, left column, line 6 to right column, line 44 & NO, 9704002, A & CA, 2211999, A & US, 5841813, A & KR, 98024316, A | 1-13 |
| A | EP, 702466, A2 (AT & T GLOBAL INFORMATION SOLUTIONS INTERNATIONAL INC.), 20 March, 1996 (20.03.96), Fig. 2 & JP, 8-97797, A (AT&T GLOBAL INFORMATION SOLUTIONS INTERNATIONAL INC.), 12, April, 1996 (12.04.96), Fig. 2 & US, 5636247, A | 1-13 |
| A | JP, 48-83716, A (Nippon Telegr. & Teleph. Corp. <NTT>), 08 November, 1973 (08.11.73), Fig. 1 (Family: none) | 1-13 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 April, 2000 (05.04.00) | 18 April, 2000 (18.04.00) |
| Name and mailing address of the ISA/ Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP00/01178

C (Continuation). DOCUMENTS CONSIDERED TO BE RELEVANT

| Category* | Citation of document, with indication, where appropriate, of the relevant passages | Relevant to claim No. |
|---|---|---|
| A | EP, 869646, A2 (LUCENT TECHNOLOGIES INC.), 07 October, 1998 (07.10.98), page 5, line 13 to page 6, line 31 & JP, 10-303848, A (LUCENT TECHNOLOGIES INC.), 13 November, 1998 (13.11.98), page 5, right column, line 9 to right column, line 45 | 1-13 |
| A | EP, 902574, A2 (Hewlett-Packard Company), 17 March, 1999 (17.03.99), page 2, line 39 to page 4, line 16 & JP, 11-163826, A (Hewlett-Packard Company), 18 June, 1999 (18.06.99), page 3, left column, line 46 to page 5, left column, line 27 | 1-13 |

Form PCT/ISA/210 (continuation of second sheet) (July 1992)